# EUROPEAN PATENT SPECIFICATION

(11) **EP 2 306 573 B1**
(45) Date of publication and mention of the grant of the patent: **27.06.2012**
(21) Application number: 10181370.7
(22) Date of filing: 28.09.2010
(51) Int. Cl.: H01M 8/04

(54) **Solid oxide fuel cell device**
Festoxid-Brennstoffzellenvorrichtung
Dispositif à pile à combustible d'oxyde solide

(30) Priority: 30.09.2009 JP 2009228733
(43) Date of publication of application: 06.04.2011
(73) Proprietor: Toto Ltd., Fukuoka 802-8601 (JP)
(72) Inventor: Otsuka, Toshiharu, Kitakyushu-shi, Fukuoka 8028601 (JP); Tsuchiya, Katsuhisa, Kitakyushu-shi, Fukuoka 8028601 (JP); Shigezumi, Tsukasa, Kitakyushu-shi, Fukuoka 8028601 (JP); Ooe, Toshiharu, Kitakyushu-shi, Fukuoka 8028601 (JP); Nakano, Kiyotaka, Kitakyushu-shi, Fukuoka 8028601 (JP)
(74) Representative: Witte, Weller & Partner

(56) References cited:
- JP-A- 7 307 163
- JP-A- 2007 220 620
- US-A1- 2005 042 488
- US-B1- 6 379 826

## Description

### BACKGROUND OF THE INVENTION

### Technical Field

0001 The present invention relates to a solid oxide fuel cell device, and more particularly to a solid oxide fuel cell device furnished with a load following function for changing the amount of fuel supplied in accordance with the amount of required power load.

### Description of the Related Art

0002 The most important issue in attaining a practical fuel cell device is how to achieve the two-fold goal of preventing fuel cell breakage and saving energy (reduce electrical grid power from commercial power sources and increase generated power from fuel cells).

0003 Research is currently underway toward the development of practical solid oxide fuel cell (also referred to below as "SOFC") device. The SOFC device operates at relatively high temperatures, using an oxide ion-conducting solid electrolyte as an electrolyte, with electrodes placed on each side thereof, supplying fuel gas on one side and oxidizer (air, oxygen, or the like) on the other.

0004 In such SOFC device, because the volume of hydrogen and air supplied to the fuel cells are extremely minute prior to reaching the state in which the hydrogen (fuel) and oxygen supplied to the fuel cells are being stably supplied to the entirety of the fuel cells (e.g., to 160 fuel cells connected in series), the problem arises that time is required until uniformity in the supply of hydrogen and air amounts is achieved in each fuel cell. An additional problem is the long time required until the target electrical generating reaction could be stably conducted in all of the fuel cells, due to factors such as individual differences and temperature differences between the fuel cells. In addition to the problems of reformer hydrogen reform delay and non-achievement of the hydrogen reform volume target values, the problem also arises in the SOFC device that time was required for the process of reaching the ideal state, due to these various difficult-to-control and uncertain elements.

0005 From one perspective, because SOFC electricity cannot be sold to utilities it is necessary from an energy saving standpoint to perform load-following control, whereby the amount of fuel supplied is made to follow changes in power required of the fuel cell device, which in turn is determined by user (general households, etc.) demand power, and varies with time of day and the like. However, when load following is implemented there is a risk that because of changes in items such as the supply amounts of fuel, air, and water, the amounts of fuel and air supplied to individual fuel cells will be nonuniform, or the flow volumes supplied to the reformer will be different from target values, etc. There is also a risk that large differences in the amount of electricity generated will arise between individual fuel cells because of temperature changes in the fuel cells associated with load following control. The above-described unstable conditions can lead to severe situations in which fuel cells fail.

0006 To resolve such problems, JP-07-307163-A discloses a fuel cell device (a phosphoric acid fuel cell device) in which power is output by instructing an inverter permitted current value to the fuel cell, using a delay time after instructing a gas increase or decrease amount determined by the amount of change in load; in the method of JP-07-307163-A, breakage of fuel cells caused by fuel depletion can be suppressed, since during load following power is not extracted until the amount of fuel is ideal. However, because this type of time delay occurs when extracting electrical power, load following characteristics are degraded, so from an energy saving standpoint, this solution alone is not enough. The fuel cell of JP-07-307163-A is thus unable to solve the dual problem of increasing energy saving performance and preventing breakage of fuel cells.

0007 JP-2007-220620-A describes a fuel cell device in which, when the temperature of the gas reforming section (the reformer) falls below a predetermined temperature, the gradual increase in output from the fuel cell main unit to the power conversion section (the inverter) is stopped and the current status is maintained, and when the temperature exceeds a predetermined temperature, a gradual increase is implemented, so that when there is temporarily insufficient heating of the reformer due to deficient supply of fuel or the like, operational halting of the device is prevented.

### SUMMARY OF THE INVENTION

0008 As described above, in order to increase energy saving performance it is desirable in principle for an inverter permitted current value (inverter permitted power value) indicating the power to be obtained from a fuel cell device to be made to rapidly respond to the load amount so as to rapidly follow that load, thereby changing the rate of increase and rate of decrease to an appropriate value. In fuel cell device, however, because of delays in supply of fuel and water to the reformer, delays in the reforming reaction, and, as described above, uncertain time delays under various conditions in the fuel cell device as well, it occurs that ideal conditions may not be achieved due to various time delays in the SOFC device, even when the inverter permitted current value rate of increase or rate of decrease are changed to ideal design values, thereby leading to the issue (problem) of fuel cell breakage. In other words, these characteristics of fuel cell device mean that feedback control is difficult, and there is no alternative to implementing feed forward control. For this reason, it was conventionally believed that speeding up load following would be difficult.

0009 Moreover, the SOFC device had inherent major problems of its own. For example, with general use storage batteries it is physically impossible to extract an amount of electrical power from a storage battery which exceeds the limit of what can extracted, and breakage does not occur, so control can be easily implemented. In the SOFC device, however, if an instruction to extract electrical power in excess of a limit value is given, that power can be extracted from the fuel cells, and that excessive power extraction leads to breakage of the fuel cells. Because of this inherent problem, the perception has been that very high precision control must be imposed on the SOFC device in order to improve load following performance amidst the elements of uncertainty, thus making it extremely difficult to improve SOFC energy saving performance.

0010 Under such circumstances, the inventors undertook diligent research to solve the inherent problems of the SOFC device, and discovered that under certain conditions, fuel cell breakage could be prevented and energy saving performance assured even when the rate of increase or rate of decrease (amount of change per unit time) in command power values (or command current values) is changed.

0011 Furthermore, the present inventors have discovered similar unstable states in which uncertain variability occurs in solid oxide fuel cell device as the result of changes in the state of various parameters such as the reformer temperature state, the fuel cell stack temperature state, outside air temperature, and fuel cell anomalies (degradation), and seek to simultaneously resolve these problems and improve reliability.

0012 It is therefore an object of the present invention to provide a solid oxide fuel cell device capable of solving the dual problem of increasing energy saving performance and preventing breakage in the fuel cells.

0013 The above object is achieved according to the present invention by providing a solid oxide fuel cell device with a load following function for changing a fuel supply rate in response to a load defined as a required power determined by demand power, comprising: a fuel cell module having a fuel cell stack composed of a plurality of solid oxide fuel cells and a reformer for reforming fuel and supplying the fuel to the fuel cells; inverter means for receiving electrical power generated by the fuel cell module and converting the power to alternating power; command power value setting means for setting a command power value to be generated by the fuel cell module based on an amount of the load; fuel control means for determining an fuel supply rate and supplying the fuel by the fuel supply rate to the fuel cells so as to generate the command power value; inverter permitted power value instruction means for instructing to the inverter means an inverter permitted power value corresponding to the command power value, which is the permitted amount of power to be extracted from the fuel cell module, after the fuel has been supplied by the fuel supply rate to the fuel cells by the fuel control means; and inverter permitted power value change means for changing an amount of change per unit time in a next inverter permitted power value based on a temperature inside the fuel cell module and outputting the amount of change per unit time to the inverter permitted power value instruction means; wherein the inverter permitted power value change means changes the amount of change per unit time in the inverter permitted power value to be larger, the higher the temperature is, in a temperature region equal to or lower than a first predetermined temperature, and to be smaller, the higher the temperature is, in a temperature region equal to or higher than a second predetermined temperature.

In the present invention thus constituted, a fuel supply rate and a command power value to be generated by the fuel cell module are set based on the amount of load; next, an inverter permitted power value corresponding to the amount of power permitted to be extracted from the fuel cell module is instructed to the inverter means, whereupon the state of the solid oxide fuel cell (SOFC) device reforming reaction and changes in conditions under which air, fuel, and the like reach the entirety of the fuel cells are added, and the amount of change per unit time in the inverter permitted power value is changed based on the temperature inside the fuel cell module, therefore fuel cell breakage associated with fuel runout and air runout can be prevented while load following characteristics are improved so that generated power obtained from the fuel cell device is increased and grid power obtained from commercial power sources is decreased, thereby saving energy.

Also, in the present invention, the amount of change per unit time in the inverter permitted power value is changed to be large in the high temperature region within the temperature region equal to or lower than a first predetermined temperature, thereby allowing for increased load following performance, and the amount of change per unit time in the inverter permitted power value is changed to be small in the low temperature region within the temperature region equal to or lower than the first predetermined temperature, thereby assuring fuel cell device performance and increasing energy savings.

In addition, in the present invention, because of the possibility of reformer anomalies, fuel cell anomalies, or degradation and the like in the temperature region equal to or higher than a second predetermined temperature, the amount of change per unit time in the inverter permitted power value is changed so that change is smaller, the higher the temperature is, in the temperature region equal to or higher than the second predetermined temperature, therefore further degradation of the fuel cells can be prevented and reliability improved while assuring energy saving performance.

0014 In a preferred embodiment of the present invention, the temperature inside the fuel cell module is the temperature of the reformer, and the solid oxide fuel cell device further comprises reformer temperature detection means for detecting the temperature of the reformer.

In the present invention thus constituted, the amount of change per unit time in the inverter permitted power value is changed based on the temperature of the reformer, which indicates changes in the reforming reaction, therefore the amount of change per unit time in the inverter permitted power value (the rate of change) can be optimized by absorbing changes in the reformer reforming reaction, thereby increasing fuel cell reliability and energy saving performance.

Also, in the present invention, because the reforming reaction is in a stable state when the reformer temperature is in the high temperature region within the temperature region equal to or lower than the first predetermined temperature, the amount of change per unit time in the inverter permitted power value can be changed to become large so as to raise load following performance; when the temperature of the reformer is in the low temperature region within the temperature region equal to or lower than the first predetermined temperature, the reforming reaction is insufficient, therefore a change is made so that the amount of change per unit time in the inverter permitted power value becomes small, and fuel cell reliability can be assured while energy saving performance is improved.

In addition, in the present invention, because of the possibility of reformer anomalies or fuel cell anomalies (degradation) in the high temperature region within the temperature region equal to or higher than the second predetermined temperature, the amount of change per unit time in the inverter permitted power value was changed to become small, therefore further degradation of fuel cells can be prevented and reliability improved while assuring energy saving performance.

0015 In still another preferred embodiment of the present invention, the temperature inside the fuel cell module is the temperature of the fuel cell stack, and the solid oxide fuel cell device further comprises stack temperature detection means for detecting the temperature of the fuel cell stack.

In the present invention thus constituted, the amount of change per unit time in the inverter permitted power value is changed based on the temperature of the fuel cell stack, which indicates changes in the generating reaction, therefore the inverter permitted power value can be optimized using the temperature state of the fuel cell stack generating reaction, thereby increasing fuel cell reliability and energy saving performance.

Because, in the present invention, the generating reaction in the fuel cell stack is stable when the fuel cell stack is in the high temperature region within the temperature region equal to or lower than the first predetermined temperature, the amount of change per unit time in the inverter permitted power value can be changed to be large so as to increase load following performance, resulting in an improvement in energy saving performance while assuring fuel cell reliability.

Also, in the present invention, the possibility can be conceived of anomalies (degradation) in the fuel cells, if the fuel cell stack temperature is in an anomalous high temperature region which is equal to or higher than the second predetermined temperature, and of a drop in oxygen concentration occurring when generating air supplied to the fuel cell stack expands beyond the normal level but the amount of oxygen contained in that air does not change, thus decreasing the amount of oxygen supplied to the fuel cells and consequently decreasing the amount of oxygen capable of being involved in electrical generation; in such cases the amount of change per unit time in the inverter permitted power value is changed to be small, thereby increasing reliability of the fuel cells while assuring energy savings.

0016 In still another embodiment of the present invention, the inverter permitted power value change means controls the amount of change per unit time in the inverter permitted power value so as to be constant in a temperature region between the first predetermined temperature and the second predetermined temperature.

In the present invention thus constituted, the generating reaction and reforming reaction are stable in the temperature regions between the first predetermined temperature and the second predetermined temperature, therefore a stable state of the generating reaction and the reforming reaction can be maintained by keeping the temperature constant, without excessively changing the amount of change per unit time in the inverter permitted power value; this enables reliability of the fuel cells to be increased while increasing energy saving performance.

0017 The above and other objects and features of the present invention will be apparent from the following description by taking reference with accompanying drawings employed for preferred embodiments of the present invention.

### BRIEF DESCRIPTION OF DRAWINGS

0018 In the accompanying drawings:
Figure 1 is a schematic overview showing a solid oxide fuel cell device according to an embodiment of the present invention;
Figure 2 is a front sectional view showing a fuel cell module in a solid oxide fuel cell device according to an embodiment of the present invention;
Figure 3 is a sectional view along a line III-III in Figure 2;
Figure 4 is a partial sectional view showing the fuel cell unit of a solid oxide fuel cell device according to an embodiment of the present invention;
Figure 5 is a perspective view showing the fuel cell stack in a solid oxide fuel cell device according to an embodiment of the present invention;
Figure 6 is a block diagram showing a solid oxide fuel cell device according to an embodiment of the present invention;
Figure 7 is a timing chart showing an operation upon startup of a solid oxide fuel cell device according to an embodiment of the present invention;
Figure 8 is a timing chart showing an operation upon stopping of a solid oxide fuel cell device according to an embodiment of the present invention;
Figure 9 is a timing chart showing an operating state of a solid oxide fuel cell device during load following according to an embodiment of the present invention, when the fuel supply rate is changed in response to the load amount of required power;
Figure 10 is a diagram showing Example 1 of the control of the amount of change per unit time of the inverter permitted current value in the solid oxide fuel cell device according to an embodiment of the present invention;
Figure 11 is a diagram showing Example 2 of the control of the amount of change per unit time of the inverter permitted current value in the solid oxide fuel cell device according to an embodiment of the present invention;
Figure 12 is a diagram showing Example 3 of the control of the amount of change per unit time of the inverter permitted current value in the solid oxide fuel cell device according to an embodiment of the present invention;
Figure 13 is a diagram showing Example 3 of the control of the amount of change per unit time of the inverter permitted current value in the solid oxide fuel cell device according to an embodiment of the present invention;
Figure 14 is a diagram showing Example 3 of the control of the amount of change per unit time of the inverter permitted current value in the solid oxide fuel cell device according to an embodiment of the present invention;
Figure 15 is a diagram showing Example 5 of the control of the amount of change per unit time of the inverter permitted current value in the solid oxide fuel cell device according to an embodiment of the present invention;
Figure 16 is a diagram showing Example 6 of the control of the amount of change per unit time of the inverter permitted current value in the solid oxide fuel cell device according to an embodiment of the present invention;
Figure 17 is a diagram showing Example 8 of the control of the amount of change per unit time of the inverter permitted current value in the solid oxide fuel cell device according to an embodiment of the present invention;
Figure 18 is a diagram showing changes in the inverter permitted power value in a solid oxide fuel cell device according to a second embodiment of the present invention;
Figure 19 is a diagram showing Example 2 of the control of the amount of change per unit time in the solid oxide fuel cell inverter permitted current value according to a second embodiment of the present invention;
Figure 20 is a diagram showing Example 2 of the control of the amount of change per unit time in the solid oxide fuel cell inverter permitted current value according to a second embodiment of the present invention;
Figure 21 is a diagram showing Example 3 of the control of the amount of change per unit time in the solid oxide fuel cell inverter permitted current value according to a second embodiment of the present invention; and
Figure 22 is a diagram showing Example 4 of the control of the amount of change per unit time in the solid oxide fuel cell inverter permitted current value according to a second embodiment of the present invention.

### DETAILED DESCRIPTION OF THE PREFEERED EMBODIMENTS

0019 Next, referring to the attached drawings, a solid oxide fuel cell (SOFC) device according to an embodiment of the present invention will be explained.

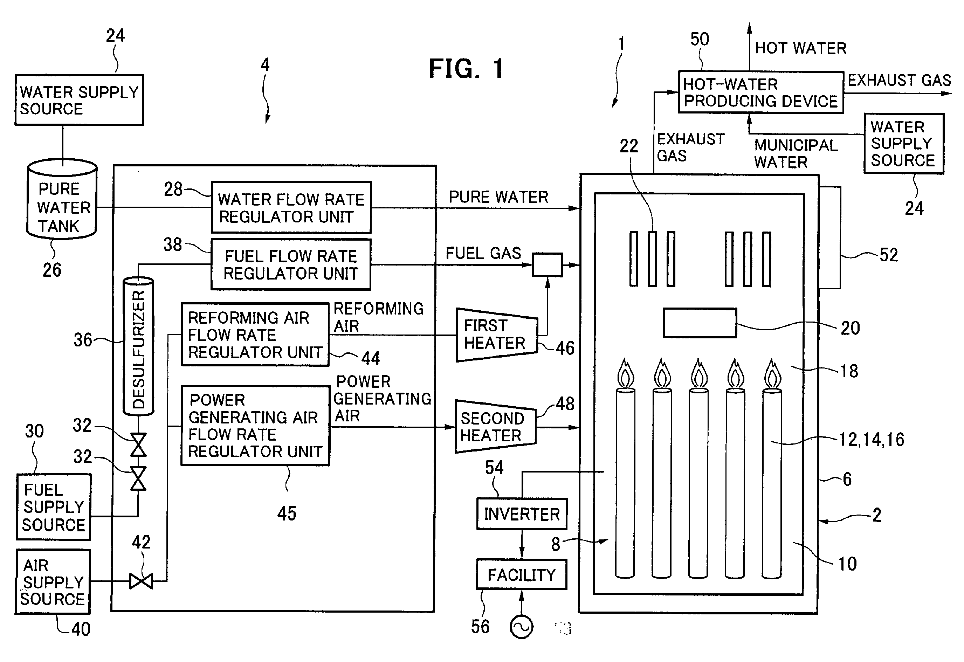

As shown in Figure 1, a solid oxide fuel cell (SOFC) device according to an embodiment of the present invention is furnished with a fuel cell module 2 and an auxiliary unit 4.

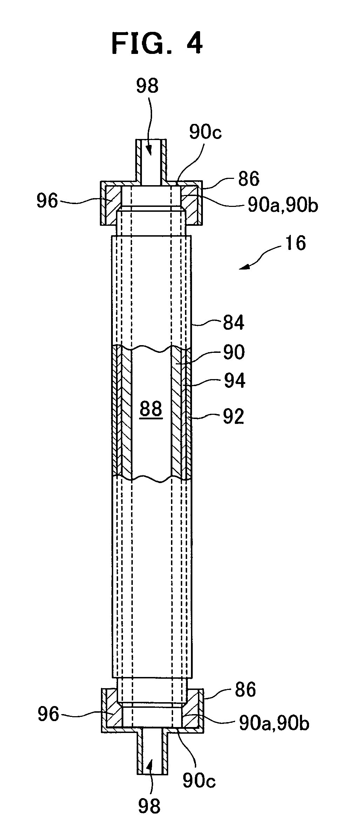

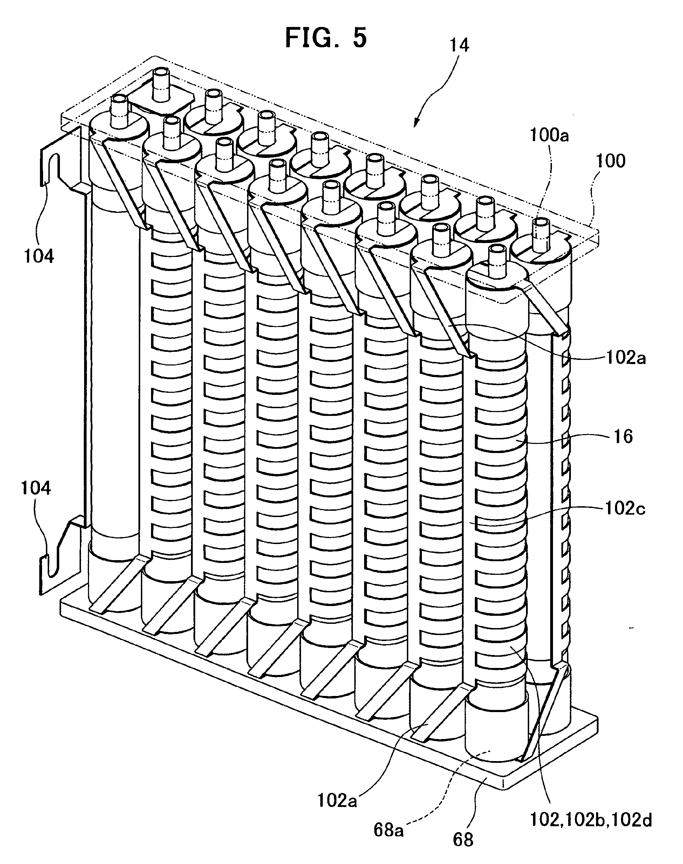

0020 The fuel cell module 2 is furnished with a housing 6; a sealed space 8 is formed within the housing 6, mediated by insulating material (not shown, however the insulating material is not an indispensable structure and may be omitted). Note that it is acceptable to provide no insulating material. A fuel cell assembly 12 for carrying out the power generating reaction between fuel gas and oxidant (air) is disposed in the power generating chamber 10 at the lower portion of this sealed space 8. This fuel cell assembly 12 is furnished with ten fuel cell stacks 14 (see Fig. 5), and the fuel cell stack 14 comprises 16 fuel cell units 16 (see Fig. 4). Thus, the fuel cell assembly 12 has 160 fuel cell units 16, all of which are serially connected.

0021 A combustion chamber 18 is formed above the aforementioned power generating chamber 10 in the sealed space 8 of the fuel cell module 2. Residual fuel gas and residual oxidant (air) not used in the power generation reaction is combusted in this combustion chamber 18 to produce exhaust gas.

A reformer 20 for reforming fuel gas is disposed at the top of the combustion chamber 18; the reformer 20 is heated by the heat of residual gas combustion to a temperature at which the reforming reaction can take place. An air heat exchanger 22 for receiving the heat of combustion and heating the air is further disposed above this reformer 20.

0022 Next, the auxiliary unit 4 is furnished with a pure water tank 26 for holding-water from a municipal or other water supply source 24 and filtering it into pure water, and a water flow rate regulator unit 28 (a "water pump" or the like driven by a motor) for regulating the flow rate (litter per minute) of water supplied from the reservoir tank. The auxiliary unit 4 is further furnished with a gas shutoff valve 32 for shutting off the fuel gas supply from a fuel supply source 30 such as municipal gas or the like, a desulfurizer 36 for desulfurizing the fuel gas, and a fuel gas flow rate regulator unit 38 (a "fuel pump" or the like driven by a motor) for regulating the flow rate (litter per minute) of fuel gas. Furthermore, an auxiliary unit 4 is furnished with an electromagnetic valve 42 for shutting off air serving as an oxidant and supplied from an air supply source 40, and a reforming air flow rate regulator unit 44 and generating air flow rate regulator unit 45 ("air blower" or the like driven by a motor) for regulating air flow rate (litter per minute).

Note that in the SOFC device according to the embodiment of the present invention, there is no heating means such as a heater for heating the reforming air supply to the reformer 20 or the power generating air supply to the power generating chamber 10 in order to efficiently raise the temperature at startup, nor is there a heating means for separately heating the reformer 20.

0023 Next, a hot-water producing device 50 supplied with exhaust gas is connected to the fuel cell module 2. Municipal water from a water supply source 24 is supplied to this hot-water producing device 50; this water is turned into hot water by the heat of the exhaust gas, and is supplied to a hot water reservoir tank in an external water heater (not shown).

The fuel cell module 2 is provided with a control box 52 for controlling the supply flow rates of fuel gas and the like.

Furthermore, an inverter 54 serving as an electrical power extraction unit (electrical power conversion unit) for supplying electrical power generated by the fuel cell module to the outside is connected to the fuel cell module 2.

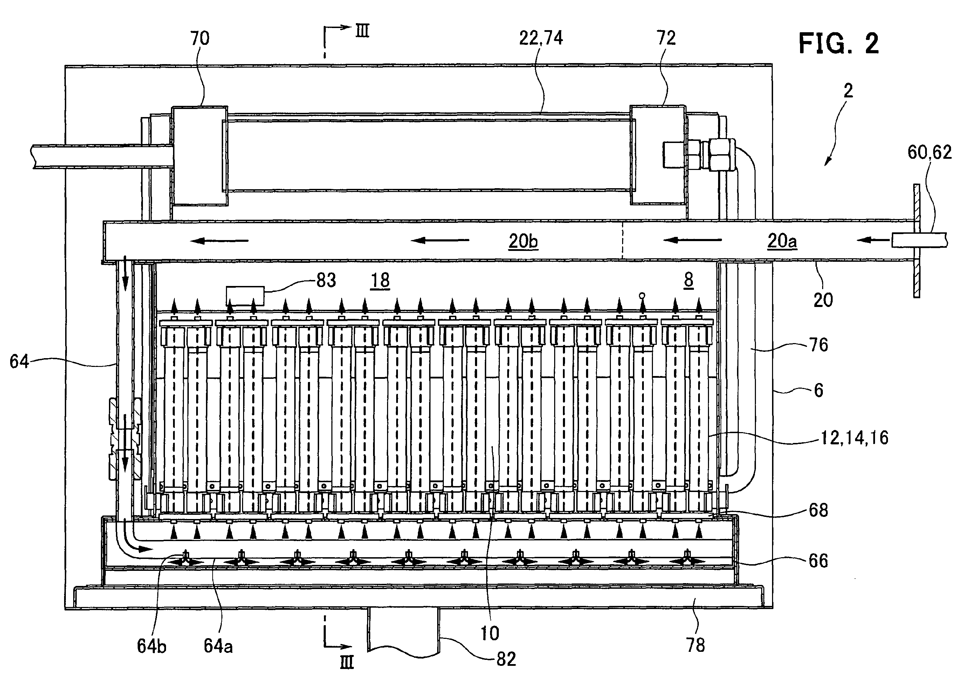

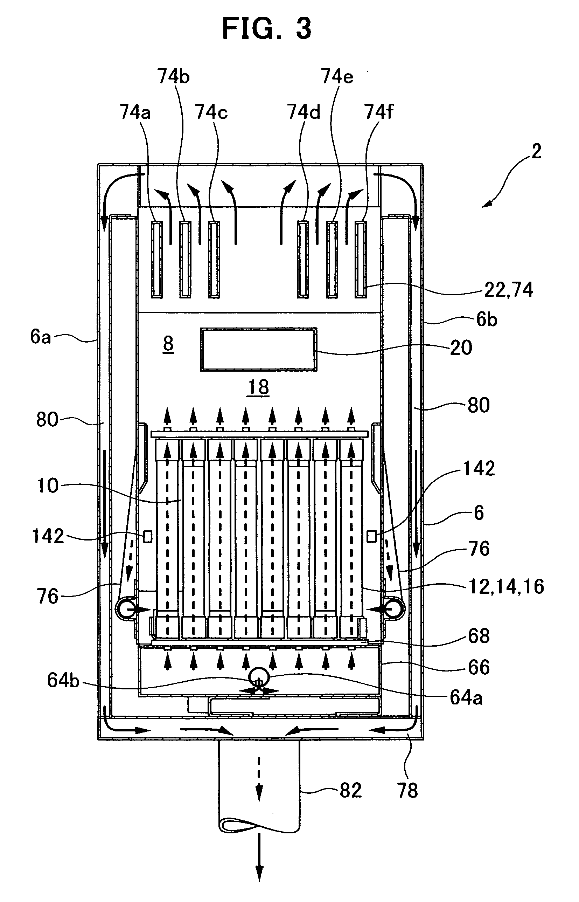

0024 The internal structure of the solid oxide fuel cell (SOFC) device according to the embodiment of the present invention is explained using Figures 2 and 3.

As shown in Figures 2 and 3, a fuel cell assembly 12, a reformer 20, and an air heat exchanger 22 are arranged in sequence starting from the bottom in the sealed space 8 within the fuel cell module 2 housing 6, as described above.

0025 A pure water guide pipe 60 for introducing pure water on the upstream end of the reformer 20, and a reform gas guide pipe 62 for introducing the fuel gas and reforming air to be reformed, are attached to the reformer 20; a vaporizing section 20a and a reforming section 20b are formed in sequence starting from the upstream side within the reformer 20, and the reforming section 20b is filled with a reforming catalyst. Fuel gas and air blended with the steam (pure water) introduced into the reformer 20 is reformed by the reforming catalyst used to fill in the reformer 20. Appropriate reforming catalysts are used, such as those in which nickel is imparted to the surface of alumina spheres, or ruthenium is imparted to alumina spheres.

0026 A fuel gas supply line 64 is connected to the downstream end of the reformer 20; this fuel gas supply line 64 extends downward, then further extends horizontally within a manifold formed under the fuel cell assembly 12. Multiple fuel supply holes 64b are formed on the bottom surface of a horizontal portion 64a of the fuel gas supply line 64; reformed fuel gas is supplied into the manifold 66 from these fuel supply holes 64b.

0027 A lower support plate 68 provided with through holes for supporting the above-described fuel cell stack 14 is attached at the top of the manifold 66, and fuel gas in the manifold 66 is supplied into the fuel cell unit 16.

0028 An air heat exchanger 22 is provided over the reformer 20. The air heat exchanger 22 is furnished with an air concentration chamber 70 on the upstream side and two air distribution chambers 72 on the downstream side; the air concentration chamber 70 and the distribution chambers 72 are connected using six air flow conduits 74. Here, as shown in Figure 3, three air flow conduits 74 form a set (74a, 74b, 74c, 74d, 74e, 74f); air in the air concentration chamber 70 flows from each set of the air flow conduits 74 to the respective air distribution chambers 72.

0029 Air flowing in the six air flow conduits 74 of the air heat exchanger 22 is preheated by rising combustion exhaust gas from the combustion chamber 18.

Air guide pipes 76 are connected to each of the respective air distribution chambers 72; these air guide pipes 76 extend downward, communicating at the bottom end side with the lower space in the generating chamber 10, and introducing preheated air into the generating chamber 10.

0030 Next, an exhaust gas chamber 78 is formed below the manifold 66. As shown in Figure 3, an exhaust gas conduit 80 extending in the vertical direction is formed on the insides of the front surface 6a and the rear surface 6b which form the faces in the longitudinal direction of the housing 6; the top inside of the exhaust gas conduit 80 communicates with the space in which the air heat exchanger to rule 22 is disposed, and the bottom end side communicates with the exhaust gas chamber 78. An exhaust gas discharge pipe 82 is connected at approximately the center of the bottom surface of the exhaust gas chamber 78; the downstream end of the exhaust gas discharge pipe 82 is connected to the above-described hot water producing device 50 shown in Figure 1.

As shown in Fig. 2, an ignition device 83 for starting the combustion of fuel gas and air is disposed on the combustion chamber 18. No heating means such as a burner or the like for separately heating the combustion chamber 18 or the fuel cell unit 16 to support ignition at startup or prevent flameout or blow out is provided on the combustion chamber 18.

0031 Next, referring to Figure 4, the fuel cell unit 16 will be explained. As shown in Figure 4, the fuel cell unit 16 is furnished with a fuel cell 84 and internal electrode terminals 86, respectively connected to the respective terminals at the top and bottom of the fuel cell 84.

The fuel cell 84 is a tubular structure extending in the vertical direction, furnished with a cylindrical internal electrode layer 90, on the inside of which is formed a fuel gas flow path 88, a cylindrical external electrode layer 92, and an electrolyte layer 94 between the internal electrode layer 90 and the external electrode layer 92. The internal electrode layer 90 is a fuel electrode through which fuel gas passes, and is a (-) pole, while the external electrode layer 92 is an air electrode for contacting the air, and is a (+) pole.

0032 The internal electrode terminals 86 attached at the top and bottom ends of the fuel cell unit 16 have the same structure, therefore the internal electrode terminal 86 attached at the top end side will be specifically explained. The top portion 90a of the inside electrode layer 90 is furnished with an outside perimeter surface 90b and top end surface 90c, exposed to the electrolyte layer 94 and the outside electrode layer 92. The inside electrode terminal 86 is connected to the outer perimeter surface 90b of the inside electrode layer 90 through a conductive seal material 96, and is electrically connected to the inside electrode layer 90 by making direct contact with the top end surface 90c of the inside electrode layer 90. A fuel gas flow path 98 communicating with fuel gas flow path 88 in the inside electrode layer 90 is formed at the center portion of the inside electrode terminal 86.

0033 The inside electrode layer 90 is formed, for example, from at least one of a mixture of Ni and zirconia doped with at least one type of rare earth element selected from among Ca, Y, Sc, or the like; or a mixture of Ni and ceria doped with at least one type of rare earth element; or any mixture of Ni with lanthanum gallate doped with at least one element selected from among Sr, Mg, Co, Fe, or Cu.

0034 The electrolyte layer 94 is formed, for example, from at least one of the following: zirconia doped with at least one type of rare earth element selected from among Y, Sc, or the like; ceria doped with at least one type of selected rare earth element; or lanthanum gallate doped with at least one element selected from among Sr or Mg.

0035 The outside electrode layer 92 is formed, for example, from at least one of the following: lanthanum manganite doped with at least one element selected from among Sr or Ca; lanthanum ferrite doped with at least one element selected from among Sr, Co, Ni, or Cu; lanthanum cobaltite doped with at least one element selected from among Sr, Fe, Ni, or Cu; Ag, or the like.

0036 Next, referring to Figure 5, the fuel cell stack 14 will be explained. As shown in Figure 5, the fuel cell stack 14 is furnished with sixteen fuel cell units 16; the top sides and bottom sides of these fuel cell units 16 are respectively supported by a lower support plate 68 and upper support plate 100. Through holes 68a and 100a, through which the inside electrode terminal 86 can penetrate, are provided on the lower support plate 68 and upper support plate 100.

0037 In addition, a current collector 102 and an external terminal 104 are attached to the fuel cell unit 16. The current collector 102 is integrally formed by a fuel electrode connecting portion 102a, which is electrically connected to the inside electrode terminal 86 attached to the inside electrode layer 90 serving as the fuel electrode, and by an air electrode connecting portion 102b, which is electrically connected to the entire external perimeter of the outside electrode layer 92 serving as the air electrode. The air electrode connecting portion 102b is formed of a vertical portion 102c extending vertically along the surface of the outside electrode layer 92, and multiple horizontal portions 102d extending in the horizontal direction from the vertical portion 102c along the surface of the outside electrode layer 92. The fuel electrode connecting portion 102a extends linearly in an upward or downward diagonal direction from the vertical portion 102c of the air electrode connecting portion 102b toward the inside electrode terminals 86 positioned in the upper and lower directions on the fuel cell unit 16.

0038 Furthermore, inside electrode terminals 86 at the top and bottom ends of the two fuel cell units 16 positioned at the end of the fuel cell stack 14 (at the front and back sides on the left edge in Figure 5) are respectively connected to the external terminals 104. These external terminals 104 are connected to the external terminals 104 (not shown) at the ends of the adjacent fuel cell stack 14, and as described above, all of the 160 fuel cell units 16 are connected in series.

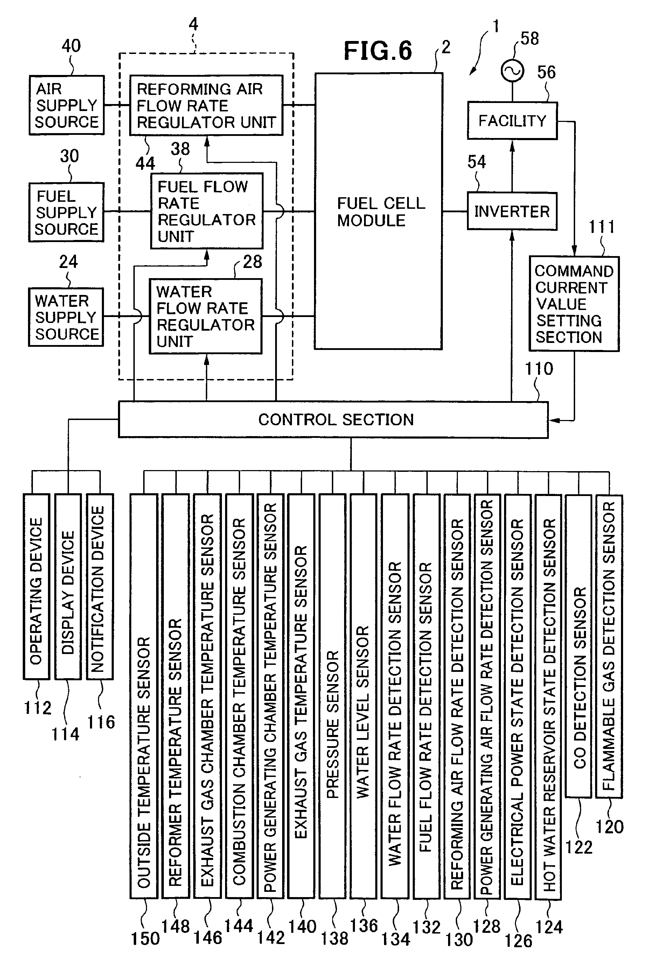

0039 Next, referring to Figure 6, the sensors attached to the solid oxide fuel cell (SOFC) device according to the embodiment of the present invention will be explained.

As shown in Figure 6, a solid oxide fuel cell device 1 is furnished with a control unit 110, an operating device 112 provided with operating buttons such as "ON" or "OFF" for user operation, a display device 114 for displaying various data such as a generator output value (Watts), and a notification device 116 for issuing warnings during abnormal states and the like are connected to the control unit 110 The notification device 116 may be connected to a remote control center to inform the control center of abnormal states.

0040 Next, signals from the various sensors described below are input to the control unit 110.

First, a flammable gas detection sensor 120 detects gas leaks and is attached to the fuel cell module 2 and the auxiliary unit 4.

The purpose of the flammable gas detection sensor 120 is to detect leakage of CO in the exhaust gas, which is meant to be exhausted to the outside via the exhaust gas conduit 80 and the like, into the external housing (not shown) which covers the fuel cell module 2 and the auxiliary unit 4.

A water reservoir state detection sensor 124 detects the temperature and amount of hot water in a water heater (not shown).

0041 An electrical power state detection sensor 126 detects current, voltage, and the like in the inverter 54 and in a distribution panel (not shown).

A power generating air flow rate detection sensor 128 detects the flow rate of power generating air supplied to the generating chamber 10.

A reforming air flow rate sensor 130 detects the flow rate of reforming air supplied to the reformer 20.

A fuel flow rate sensor 132 detects the flow rate of fuel gas supplied to the reformer 20.

0042 A water flow rate sensor 134 detects the flow rate of pure water (steam) supplied to the reformer 20.

A water level sensor 136 detects the water level in pure water tank 26.

A pressure sensor 138 detects pressure on the upstream side outside the reformer 20.

An exhaust temperature sensor 140 detects the temperature of exhaust gas flowing into the hot water producing device 50.

0043 As shown in Figure 3, a generating chamber temperature sensor 142 is disposed on the front surface side and rear surface side around the fuel cell assembly 12, and detects the temperature around the fuel cell stack 14 in order to estimate the temperature of the fuel cell stack 14 (i.e., of the fuel cell 84 itself).

A combustion chamber temperature sensor 144 detects the temperature in combustion chamber 18.

An exhaust gas chamber temperature sensor 146 detects the temperature of exhaust gases in the exhaust gas chamber 78.

A reformer temperature sensor 148 detects the temperature of the reformer 20 and calculates the reformer 20 temperature from the intake and exit temperatures on the reformer 20.

If the solid oxide fuel cell (SOFC) device is placed outdoors, the outside temperature sensor 150 detects the temperature of the outside atmosphere. Sensors to detect outside atmospheric humidity and the like may also be provided.

0044 Signals from these various sensors are sent to the control unit 110; the control unit 110 sends control signals to the water flow rate regulator unit 28, the fuel flow rate regulator unit 38, the reforming air flow rate regulator unit 44, and the power generating air flow rate regulator unit 45 based on data from the sensors, and controls the flow rates in each of these units.

The control unit 110 sends control signals to the inverter 54 to control the supplied electrical power.

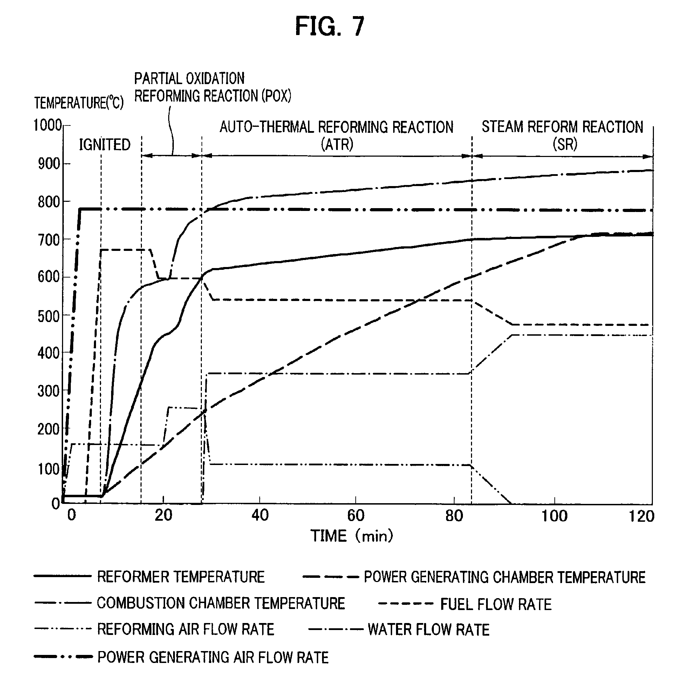

0045 Next, referring to Figure 7, the operation of a solid oxide fuel cell (SOFC) device according to the present embodiment at the time of startup will be explained.

In order to warm up the fuel cell module 2, the operation starts in a no-load state, i.e., with the circuit which includes the fuel cell module 2 in an open state. At this point current does not flow in the circuit, therefore the fuel cell module 2 does not generate electricity.

0046 First, reforming air is supplied from the reforming air flow rate regulator unit 44 to the reformer 20 on the fuel cell module 2. At the same time, power generating air is supplied from the generating air flow rate regulator unit 45 to an air heat exchanger 22 of the fuel cell module 2, and the power generating air reaches the generating chamber 10 and the combustion chamber 18.

Immediately thereafter, fuel gas is also supplied from the fuel flow rate regulator unit 38, and fuel gas into which reforming air is blended passes through the reformer 20, the fuel cell stack 14, and the fuel cell unit 16 to reach the combustion chamber 18.

0047 Next, ignition is brought about by the ignition device 83, and fuel gas and air (reforming air and power generating air) supplied to the combustion chamber 18 is combusted. This combustion of fuel gas and air produces exhaust gas; the generating chamber 10 is warmed by the exhaust gas, and when the exhaust gas rises into the fuel cell module 2 sealed space 8, the fuel gas, which includes the reforming air in the reformer 20 is warm, as is the power generating air inside the air heat exchanger 22.

0048 At this point, fuel gas into which the reforming air is blended is supplied to the reformer 20 by the fuel flow rate regulator unit 38 and the reforming air flow rate regulator unit 44, therefore the partial oxidation reforming reaction POX given by Expression (1) proceeds in the reformer 20. This partial oxidation reforming reaction POX is an exothermic reaction, and therefore has favorable starting characteristics. The fuel gas whose temperature has risen is supplied from the fuel gas supply line 64 to the bottom of the fuel cell stack 14, and by this means the fuel cell stack 14 is heated from the bottom, and the temperature of the combustion chamber 18 has risen by the combustion of the fuel gas and air, and the fuel cell stack 14 is therefore heated from the upper side such that the temperature of the fuel cell stack 14 can be raised in an essentially uniform manner in the vertical direction. Even though the partial oxidation reforming reaction POX is progressing, the ongoing combustion reaction between fuel gas and air is continued in the combustion chamber 18.

0049

CₘHₙ+xO₂ → aCO₂+bCO+cH₂ (1)

0050 When the reformer temperature sensor 148 detects that the reformer 20 has reached a predetermined temperature (e.g. 600° C) after the start of the partial oxidation reforming reaction POX, a pre-blended gas of fuel gas, reforming air, and steam is applied to the reformer 20 by the water flow rate regulator unit 28, the fuel flow rate regulator unit 38, and the reforming air flow rate regulator unit 44. At this point an auto-thermal reforming reaction ATR, which makes use of both the aforementioned partial oxidation reforming reaction POX and the steam reforming reaction SR described below, proceeds in the reformer 20. This auto-thermal reforming reaction ATR can be internally thermally balanced, therefore the reaction proceeds in a thermally independent fashion inside the reformer 20. In other words, when there is a large amount of oxygen (air), heat emission by the partial oxidation reforming reaction POX dominates, and when there is a large amount of steam, the endothermic steam reforming reaction SR dominates. At this stage, the initial stage of startup has passed and some degree of elevated temperature has been achieved within the generating chamber 10, therefore even if the endothermic reaction is dominant, there will be no major drop in temperature. Also, the combustion reaction continues within the combustion chamber 18 even as the auto-thermal reforming reaction ATR proceeds.

0051 When the reformer temperature sensor 146 detects that the reformer 20 has reached a predetermined temperature (e.g., 700° C) following the start of the auto-thermal reforming reaction ATR shown as Expression (2), the supply of reforming air by the reforming air flow rate regulator unit 44 is stopped, and the supply of steam by the water flow rate regulator unit 28 is increased. By this means, a gas containing no air and only containing fuel gas and steam is supplied to the reformer 20, where the steam reforming reaction SR of Expression (3) proceeds.

0052

CₘHₙ+xO₂ + yH₂O → aCO₂+bCO+cH₂ (2)

CₘHₙ+xH₂O → aCO₂+bCO₂+cH₂ (3)

0053 This steam reforming reaction SR is an endothermic reaction, therefore the reaction proceeds as a thermal balance is maintained with the heat of combustion from the combustion chamber 18. At this stage, the fuel cell module 2 is in the final stages of startup, therefore the temperature has risen to a sufficiently high level within the generating chamber 10 so that no major temperature drop is induced in the power generating chamber 10 even though an endothermic reaction is proceeding. Also, the combustion reaction continues to proceed in the combustion chamber 18 even as the steam reforming reaction SR is proceeding.

0054 Thus, after the fuel cell module 2 has been ignited by the ignition device 83, the temperature inside the generating chamber 10 gradually rises as a result of the partial oxidation reforming reaction POX, the auto-thermal reforming reaction ATR, and the steam reforming reaction SR which proceed in that sequence. Next, when the temperature inside the generating chamber 10 and the temperature of the fuel cell 84 reach a predetermined generating temperature which is lower than the rated temperature at which the cell module 2 can be stably operated, the circuit which includes the fuel cell module 2 is closed, power generation by the fuel cell module 2 begins, and current then flows to the circuit. Generation of electricity by the fuel cell module 2 causes the fuel cell 84 to emit heat, such that the temperature of the fuel cell 84 rises. As a result, the rated temperature at which the fuel cell module 2 is operated becomes, for example, 600°C - 800°C.

0055 Following this, fuel gas and air having respective flow rates greater than those consumed by the fuel cell 84 is applied in order to maintain the rated temperature and continue combustion inside the combustion chamber 18. Generation of electricity by the high reform-efficiency steam reforming reaction SR proceeds while electricity is being generated.

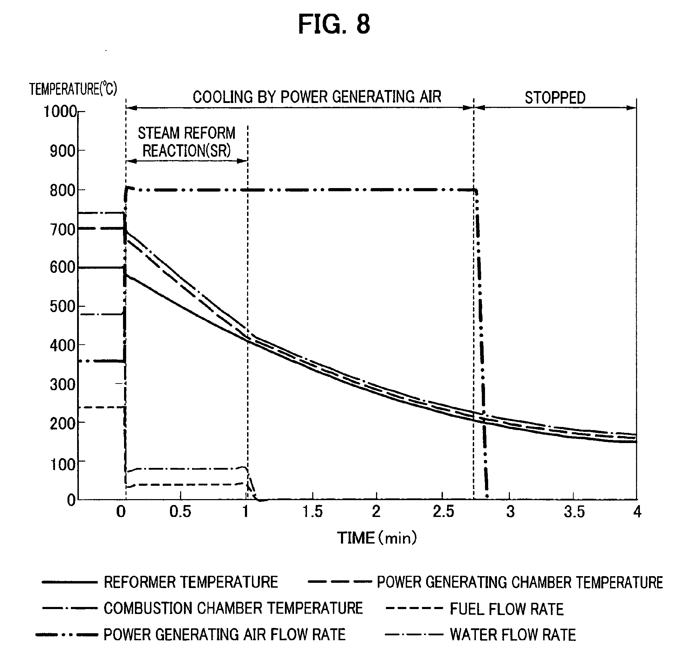

0056 Next, referring to Figure 8, the operation upon stopping the solid oxide fuel cell (SOFC) device according to the embodiment of the present invention will be explained.

As shown in Figure 8, when stopping the operation of the fuel cell module 2, the fuel flow rate regulator unit 38 and the water flow rate regulator unit 28 are first operated to reduce the flow rates of fuel gas and steam being supplied to the reformer 20.

0057 When stopping the operation of the fuel cell module 2, the flow rate of power generating air supplied by the power generating air flow rate regulator unit 45 into the fuel cell module 2 is being increased at the same time that the flow rates of fuel gas and steam being supplied to the reformer 20 is being reduced; the fuel cell assembly 12 and the reformer 20 are air cooled to reduce their temperature. Thereafter, when the temperature of the generating chamber reaches a predetermined temperature, e.g. 400° C, supply of the fuel gas and steam to the reformer 20 is stopped, and the steam reforming reaction SR in the reformer 20 ends. Supply of the power generating air continues until the temperature in the reformer 20 reaches a predetermined temperature, e.g. 200° C; when the predetermined temperature is reached, the supply of power generating air from the power generating air flow rate regulator unit 45 is stopped.

0058 Thus in the embodiment of the present invention, the steam reforming reaction SR by the reformer 20 and cooling by power generating air are used in combination, therefore when the operation of the fuel cell module 2 is stopped, that operation can be stopped relatively quickly.

0059 Next, as shown in Figures 1 and 6, the solid oxide fuel cell device 1 of the present embodiment is disposed in a facility 56 such as a household or store, and the facility 56 is supplied with generated power from the inverter 54. This facility 56 is connected to a commercial power supply 58, and grid power is supplied from this commercial power supply 58.

In addition, in the solid oxide fuel cell device 1 of the present embodiment, all or a portion of the demand power quantity required by the facility 56 is set as demand power P of the solid oxide fuel cell device 1, and power following operation is performed whereby the electrical generation output value is changed in response to this demand power P.

0060 As shown in Figure 6, the solid oxide fuel cell device 1 is furnished with a command current value setting section 111 for setting the command current value Iₛ, which is the amount of current for the power to be generated by the solid oxide fuel cell device 1 based on the required power P of the solid oxide fuel cell device 1 as determined from the demand power required by the facility 56.

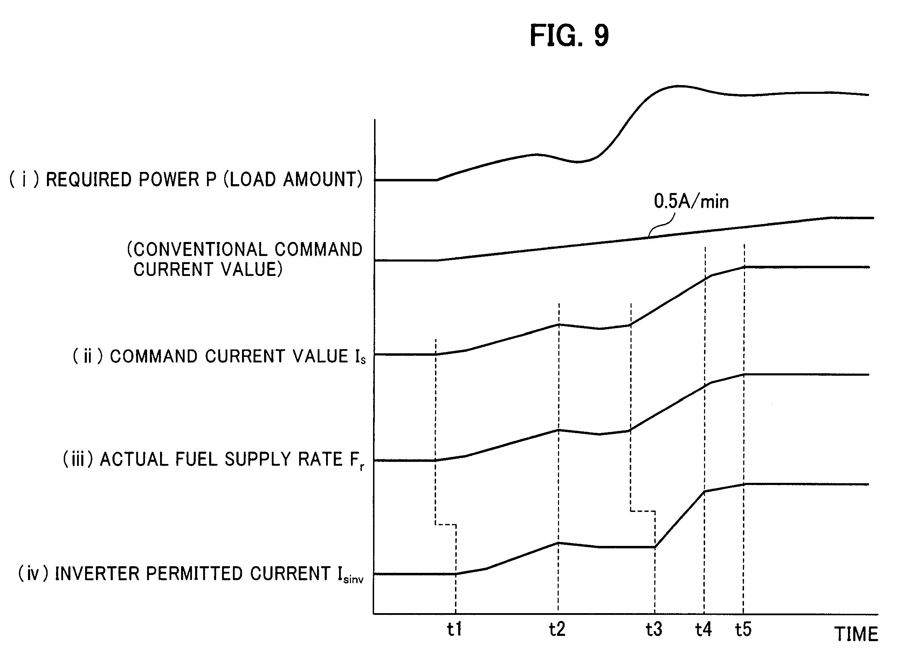

0061 Next, referring to Figure 9, the operational state of the solid oxide fuel cell device of the present embodiment during load following will be described.

Here, the electrical power generated by the solid oxide fuel cell device 1 according to the present embodiment (the actual generated power) is controlled based on the demand power required by facilities 56 such as homes and the like (the total demand power), but if the demand power exceeds the maximum rated power which can be generated by the solid oxide fuel cell device 1, the missing portion is supplied by grid power (here, the portion representing the burden demanded of the solid oxide fuel cell device 1 out of the demand power is referred to as required power P (required load P)). Since demand power varies greatly with time, it is difficult for the power generated by the solid oxide fuel cell 1 to completely follow this demand power. Therefore the power generated by the solid oxide fuel cell device 1 (the fuel cell module 2) is controlled using as a target value a command power in which variation in required power P is kept down to a followable level. In addition, even when fuel supply rate and the like is controlled based on a command power, time is required to actually generate electrical power within the fuel cell module 2, therefore a time delay arises the actual generated power extracted from the fuel cell module 2 after fuel is supplied, hence the inverter permitted power serving as permission signal, which is the permitted value for actually extracting power output to the inverter, is output by anticipating a time delay from the start of the supply of fuel.

0062 Note that, in the present embodiment, the solid oxide fuel cell device 1 operates so that the output voltage of the inverter 54 is a constant value 100V, therefore the above-described required power, maximum rated power, inverter permitted power, and actual generated power are respectively proportional to the required current, maximum rated current, inverter permitted current, and actual generated current. While the solid oxide fuel cell device 1 of the present embodiment is controlled based on these current values, the solid oxide fuel cell 1 may also be controlled in the same fashion, replacing "current" in the above with "power." Note that, in the claims of the present invention, "power" is used in a broad meaning (command power, inverter permitted power, etc.) where reference is made to controlling current, and that this is not a description in which the interpretation is limited to current.

0063 Next, Figure 9 is a timing chart showing the operating state during load following, when the electrical generating output value is changed in response to the demand power on the solid oxide fuel cell device 1 according to the embodiment of the present invention. Here, the horizontal axis of the Figure 9 shows time, and the typical times at which the command current value Iₛ changes are shown by times t1-t5. At the same time, the vertical axis of Figure 9 shows in a time line from top to bottom as (i) - (iv) the processes by which, starting from the setting of required power P, the inverter permitted current Iₛᵢₙᵥ permitting the extraction of the actual generated power Pᵣ is output at the inverter 54.

0064 First, as shown in Figure 9, in the solid oxide fuel cell device 1, when the required power P (load amount) for the solid oxide fuel cell 1 needed by the facility 56 is determined from the demand power (see Figure 9 "(i) Required Power P"), the command current Iₛ, which is the amount of current to be generated by the solid oxide fuel cell 1, is set based on the required power P by the command current value setting section 111 (see Figure 9 "(ii) Command Current Iₛ").

Here, in the present embodiment the command current Iₛ is so changing the amount of change per unit time based on the amount of load, who is the required power P. Note that in conventional solid oxide fuel cell device, the amount of change per unit time in the command current was set, for example, at 0. 5 A/min in order to prevent breakage of cells, so that it grew at a rather slow rate.

0065 Next, the control section 110 sets the fuel supply amount F supplied to the reformer 20 in the fuel cell module 2 from the fuel flow regulator unit 38 based on the command current Iₛ set by the command current value setting section 111. The fuel flow regulator unit 38 is controlled to increase or decrease the fuel supply rate F in accordance with the change in the command current Iₛ, so that at least the command current Iₛ can be output, and fuel is supplied to follow the required load.

At the same time, the actual fuel supply rate Fᵣ, which is the actual measured value of the fuel supply rate supplied to the reformer 20 from the fuel flow regulator unit 38, is detected by a fuel flow rate sensor 132 (see Figure 9 "(iii) Actual Fuel Supply Rate Fᵣ).

0066 Next, the control section 110 sets the generating air supply rate A supplied to the fuel cell assembly 12 in the fuel cell module 2 from the generating air flow regulator unit 45 based on the command current Iₛ set in the command current value setting section 111, and on the previously detected actual fuel supply rate Fᵣ.

Similarly, the control section 110 also sets the water supply rate W supplied to the reformer 20 in the fuel cell module 2 from the water flow regulator unit 28 based on the command current Iₛ set in the command current value setting section 111 and on the previously detected actual fuel supply rate Fᵣ.

0067 Next, the control section 110 permits the extraction of the actual generated power Pᵣ and sends an inverter permitted current Iₛᵢₙᵥ control signal corresponding to the command current Iₛ to the inverter 54, thereby controlling the power supply rate supplied to the facility 56. Here, in the solid oxide fuel cell device 1 according to the present embodiment, the inverter permitted current Iₛᵢₙᵥ normally corresponds to a value for the current actually output from the fuel cell module 2 to the inverter 54 (actual generated currentᵣ) (see Figure 9 "(iv) Inverter Permitted Current Iₛᵢₙᵥ").

0068 As shown in Figure 9, in the solid oxide fuel cell device 1 of the present embodiment, the amount of change per unit time in the inverter permitted current value Iₛᵢₙᵥ commanded to the inverter 54 is changed based on the load status (described in detail below); that is, the system has been given the characteristic that a plurality of differing values for the amount of change per unit time are obtained for the inverter permitted current value, thus preventing fuel cell breakage associated with fuel depletion or air depletion, while saving energy by raising load following characteristics, thus increasing generated power from the fuel cell and reducing grid power from commercial power sources. The control section 110 thus changes the amount of change per unit time for the inverter permitted current value Iₛᵢₙᵥ, and this changed inverter permitted current value Iₛᵢₙᵥ per unit time is output to the inverter 54.

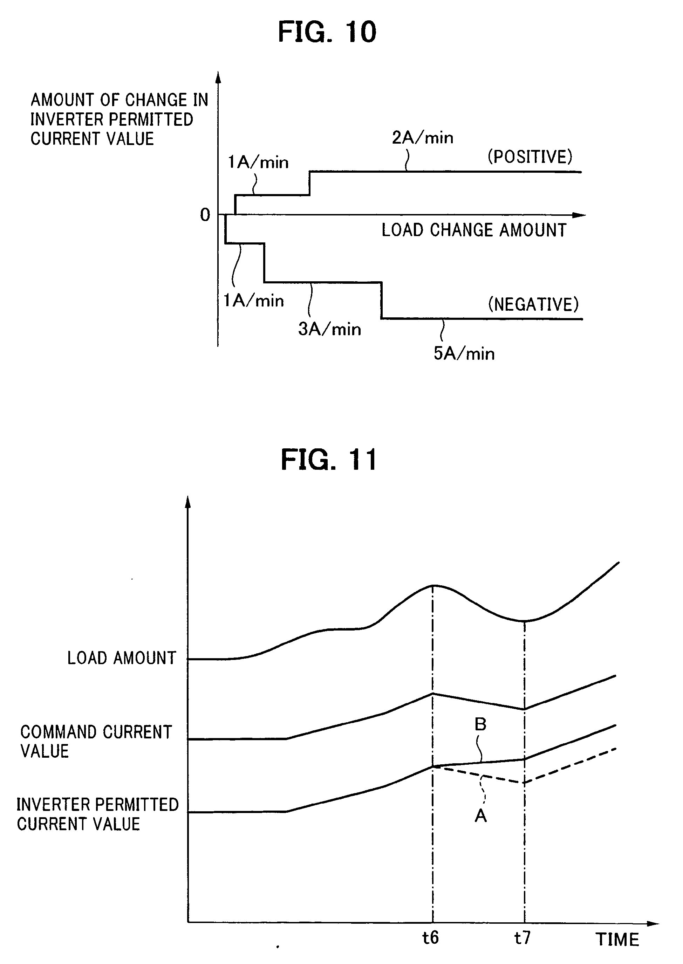

0069 Next, referring to Figures 10 through 17, the control exercised by the control section 110, which changes the amount of change per unit time in the inverter permitted current value relative to the amount of load for load following by the solid oxide fuel cell device of the present embodiment will be described. Examples in which the amount of change per unit time in the inverter permitted current value is changed under various load conditions to increase load following performance and thereby improve energy saving performance will be described; these examples can be freely combined as needed.

0070 First, referring to Figure 10, Example 1 of the control according to the present embodiment will be described, whereby the amount of change per unit time in the inverter permitted current value is changed.

As shown in Figure 10, the amount of change per unit time in the inverter permitted current value (the inverter permitted current value change amount) is determined by the amount of change in load (load change amount) and the positive or negative the polarity state of the load change amount.

0071 First, the amount of change per unit time in the inverter permitted current value is set to be smaller when the amount of change in the load is small than when it is large. Specifically, when the amount of load change is small, it is set at 1 A/min (load change amount is positive), 1 A/min, and 3 A/min (load change amount is negative); and when the load change amount is large, it is set at 2A/min (load change amount is positive) and 5 A/min (load change amount is negative).

0072 When the amount of change in load is large from the past to the present, the amounts of fuel and air supplied to the fuel cell module 2 can be increased, so that the fuel and air pressure fluctuation increases due to this increase in supply rate, thereby making the supply to each fuel cell 84 more uniform. In contrast, when the amount of change in the load is small, the fluctuation in fuel and air pressure is also small, making it difficult to supply each of the fuel cells 84 in a uniform manner. Therefore in Example 1 of the present embodiment, the amount of change per unit time in the next inverter permitted current value was changed to be a smaller value when the amount of change is load was small than when it was large, so that target amounts of fuel and air were not supplied in a portion of the fuel cells, and notwithstanding the partial insufficient state, the inverter extracted electrical power, thereby preventing the degradation or breakage of fuel cells.

0073 Next, as shown in Figure 10, while it is true that the amount of change per unit time in the inverter permitted current value (the inverter permitted current value change amount) is changed in both the case in which the load change amount is positive (load amount is increasing) and the case in which it is negative (load amount is decreasing), the amount of change per unit time in the inverter permitted current value (the inverter permitted current value change amount) is changed to a larger value when the load change amount is negative than when it is positive.

0074 Thus, in Example 1 of the present embodiment, when the amount of change per unit time in the inverter permitted current value from the past to the present is negative, i.e., when load decreases, the amount of change for the next inverter permitted current value is selected to have a proportionality characteristic whereby the amount of change per unit time is greater than when load increases, therefore when excessive fuel is being supplied relative to the target, the supply of fuel can be quickly reduced to the target value, thereby increasing fuel cell following performance and preventing unnecessary fuel waste. On the other hand, when the load suddenly increases, it is necessary to supply fuel and air in amounts suited to the increase in inverter permitted current value in order to increase the next inverter permitted current value, but at this point fuel or air supply delays or fuel reforming delays may occur, so that some time is needed until a state is achieved whereby power is actually extracted from the fuel cell module, leading to the risk of fuel cell degradation or breakage if current is extracted by the inverter before that. Therefore in Example 1 of the present embodiment, when the amount of change per unit time in the inverter permitted current value from the past to the present is positive, i.e. when the load amount has suddenly increased, the amount of change per unit time in the inverter permitted current value is changed to a value which is smaller than when the load decreases, thereby enabling the suppression of problems arising from fuel cell module following delays, and reliably preventing the degradation and breakage of fuel cells arising from excessive extraction of current by the inverter.

0075 Next, referring to Figure 11, Example 2 of the control according to the present embodiment will be described, whereby the amount of change per unit time in the inverter permitted current value is changed.

As shown in Figure 11, during the interval between times t6-t7, the deviation between the present inverter permitted current value and the target inverter permitted current value (= the target inverter permitted current value - the present inverter permitted current value) is positive (target inverter permitted current value > present inverter permitted current value) and the load amount is decreasing. In Example 2 of the present embodiment, in the state described above the decrease in the amount of change per unit time in the inverter permitted current value is suppressed. Specifically, the amount of change per unit time in the inverter permitted current value is changed from the dotted line A to the solid line B.

0076 In the state that the deviation in the present inverter permitted current value relative to the target inverter permitted current value is positive and the load amount is decreasing from the present to the next, the load amount is theoretically decreasing, therefore the deviation in the present inverter permitted current value relative to the target inverter permitted current value should become negative, however in actuality the conditions described above obtain due to the load following delay of the fuel cell module. For that reason, in Example 2 of the present embodiment, under those circumstances the amount of change per unit time in the next inverter permitted current value is changed so as to suppress a decrease in the amount of change in the next inverter permitted current value, thereby shortening the time needed to approach the target inverter permitted current value, resulting in an increase in generated power obtained from the fuel cell and a decrease in grid power obtained from commercial power supplies, thereby saving energy.

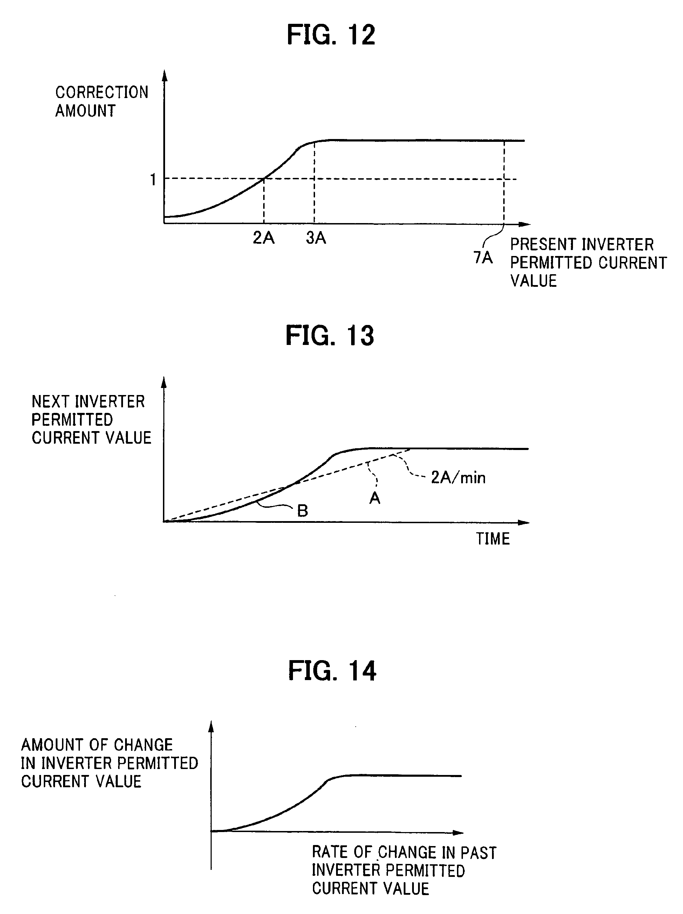

0077 Next, referring to Figures 12 and 13, Example 3 of the control according to the present embodiment will be described, whereby the amount of change per unit time in the inverter permitted current value is changed.

In this Example 3, the amount of change per unit time in the next inverter permitted current value is changed (corrected) to a larger value when the present inverter permitted current value is large than when that value is small. Specifically, as shown in Figure 12, in the region between present inverter permitted current values of 0A to 3A, the correction amount of the change amount per unit time in the inverter permitted current value increases with the size of the inverter permitted current value; in the region in which the present inverter permitted current value is 3A or greater, the amount of correction is a fixed value. When the present inverter permitted current value is 2A, the correction amount is "1 ".

0078 Figure 13 shows the next inverter permitted current value by changing the amount of change per unit time in the present inverter permitted current value. Figure 13 shows an example in which the amount of change per unit time in the next inverter permitted current value changed from the present inverter permitted current value is 2 A/min; this change amount is shown by the dotted line A; in actuality, response is as shown by the solid line B.

0079 In Example 3 of the present embodiment, the generating reaction is occurring and the fuel cells are stable at a high temperature when the inverter permitted current value has a large value, i.e., when the amount of power generated by the present fuel cell module 2 is high, therefore negative effects on the fuel cells can be suppressed even when the amount of change per unit time when changing the present inverter permitted current value to the next inverter permitted current value is changed to a greater value when the present inverter permitted current value is large than when it is small in order to increase following sensitivity.

0080 Next, referring to Figure 14, Example 4 of the control according to the present embodiment will be described, whereby the amount of change per unit time in the inverter permitted current value is changed.

In Example 4 of the present embodiment, the amount of change per unit time in the inverter permitted current value is changed based on the status of the past inverter permitted current value. In other words, when the past inverter permitted current value is increasing and the next inverter permitted current value will also increase, the larger amount of change per unit time in the next inverter permitted current value is changed to increase, the larger the past inverter permitted current value rate of change was.

It is preferable to use the average value of the differential in inverter permitted current values over the last 5 times, for example, as the past inverter permitted current value state. An average value for the last 5 times of the inverter permitted current value itself may also be used.

0081 When the amount of change per unit time in the inverter permitted current value from the past to the present is small, a large amount of change per unit time in the inverter permitted current value from the present to the next will cause a sudden change, leading to a risk of fuel reforming delays in the reformer or fuel or air supply delays and the like. At the same time, when the amount of change per unit time in the inverter permitted current value from the past to the present is large, the supply amounts of fuel, air, and water are currently in the process of changing at a predetermined rate of change; in such cases, because the system is already in the process of changing, the occurrence of large fuel reform delays or fuel and air supply delays can be prevented even if the amount of change per unit time in the inverter permitted current value is large from the present to the next. Therefore in Example 4 of the present embodiment, when the past inverter permitted current value is increasing and the next inverter permitted current value is also increasing, a change is made so that the larger amount of change per unit time in the next inverter permitted current value increases, the larger the amount of change per unit time in the past inverter permitted current value is, so following performance can be increased and energy savings improved, while negative effects on the fuel cells are suppressed.

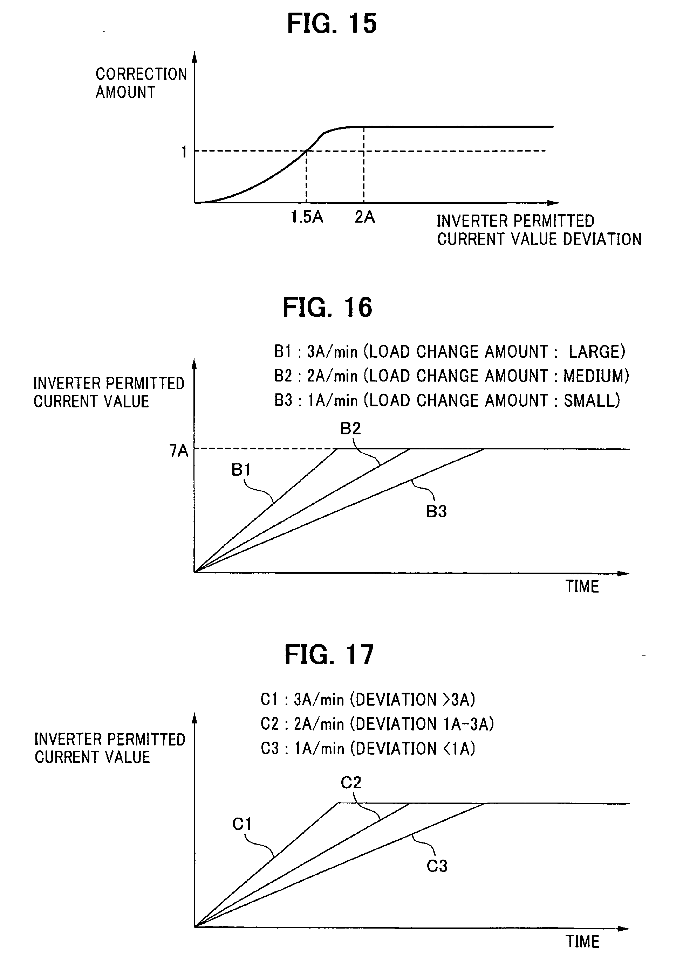

0082 Next, referring to Figure 15, Example 5 of the control according to the present embodiment will be described, whereby the amount of change per unit time in the inverter permitted current value is changed.

In this Example 5, the amount of change per unit time in the present inverter permitted current value is changed (corrected) to be more greater, the larger the deviation relative to the target inverter permitted current value is. Specifically, as shown in Figure 15, in the region where the inverter permitted current value deviation is between 0 A and 3 A, the correction amount of the change amount per unit time in the inverter permitted current value increases with the size of the inverter permitted current value deviation, and in the region in which the present inverter permitted current value deviation is 2 A or greater, the amount of correction is a fixed value. The inverter permitted current value deviation is 1.5A, the correction amount is "1".

0083 In Example 5 of the embodiment, the amount of change per unit time in the present inverter permitted current value is changed (corrected) so as to be large to the degree that the deviation of the present inverter permitted current value is large relative to the target inverter permitted current value, therefore following performance can be improved. Furthermore, in the convergence process in which the deviation is reduced, the amount of change per unit time in the inverter permitted current value slowly reaches the target inverter permitted current value, therefore fuel depletion can be reliably prevented.

0084 Next, referring to Figure 16, Example 6 of the control according to the present embodiment will be described, whereby the amount of change per unit time in the inverter permitted current value is changed.

In this Example 6, proportionality characteristics indicating the amount of change per unit time for three different inverter permitted current values are prepared (set) ahead of time; one of these proportionality characteristics is selected according to the amount of change in load (load change amount), and the amount of change per unit time in inverter permitted current value is changed according to this selected proportionality characteristic.

0085 Specifically, as shown in Figure 16, what is prepared is a 3 A/min proportionality characteristic B1 for the inverter permitted current value amount of change per unit time when the load change amount is large, a 2 A/min proportionality characteristic B2 for the inverter permitted current value amount of change per unit time when the load change amount is medium, and a 1 A/min proportionality characteristic B3 for the inverter permitted current value amount of change per unit time when the load change amount is small; one of these proportionality characteristics is selected according to the size of the load change amount.

0086 In this Example 6, three different proportionality characteristics indicating the inverter permitted current value amount of change per unit time are prepared ahead of time; one of these three proportionality characteristics is selected based on the state of the load, and the next inverter permitted current value amount of change per unit time is changed by using this selected proportionality characteristic, thus simplifying fuel cell control and stabilizing changes in the inverter permitted current value with respect to the changing load state; as a result, fuel supply, air supply, and the reformer reaction can be stabilized.

0087 Next, in the present embodiment, Example 7 of the control according to the present embodiment will be described, whereby the amount of change per unit time in the inverter permitted current value is changed.

In this Example 7, the amounts of change (large, medium, small) in load corresponding to the multiple proportionality characteristics are set to fall within a minimum and maximum range of inverter permitted current values determined by the load amount, and are further restricted so that the proportionality characteristic B1 which determines the amount of change in the maximum load amount is selected even when the load change amount exceeds the maximum load change amount (load change amount = large) determined by the proportionality characteristic B1.

0088 In this Example 7, the amount of change per unit time in the inverter permitted current value is kept down even when the load amount changes greatly, thereby enabling a stabilization of fuel, air, and reform reaction.

0089 Next, referring to Figure 17, Example 8 of the control according to the present embodiment will be described, whereby the amount of change per unit time in the inverter permitted current value is changed.

In this Example 8, three different proportionality characteristics for the deviation in the present inverter permitted current value relative to the target inverter permitted current value are prepared (set); one of these proportionality characteristics is selected based on the amount of the deviation, and the amount of change per unit time in the present inverter permitted current value is changed according to this selected proportionality characteristic.

0090 Specifically, as shown in Figure 17, what are prepared are a proportionality characteristic C1 for which the deviation of the present inverter permitted current value relative to the target inverter permitted current value is 3 A or greater, a proportionality characteristic C2 for a deviation of 1 A to 3 A, and a proportionality characteristic C3 for a deviation of less than 1 A; one of these proportionality characteristics is selected in accordance with the size of the deviation.

0091 In this Example 8, multiple proportionality characteristics are prepared (set) ahead of time in correspondence to the deviation of the present inverter permitted current value relative to the target inverter permitted current value, therefore fuel cell control can be simplified and the change in the inverter permitted current value relative to the changing deviation can be stabilized, resulting in a stabilization of the fuel supply, the air supply, and the reform reaction.

0092 Furthermore, in the present embodiment the following control may also be exercised simultaneously with the above-described Examples 1 through 8. That is, it is also acceptable to vary the fuel supply rate supplied in response to the amount of change per unit time in the deviation of the present inverter permitted current value relative to the target inverter permitted current value while simultaneously changing the amount of change per unit time in the deviation of the present inverter permitted current value relative to the target inverter permitted current value.

0093 By this means, the amount of fuel supplied is varied in response to the amount of change per unit time in the inverter permitted current value at the same time that the amount of change per unit time in the inverter permitted current value is being changed, thereby enabling increased load following characteristics while also greatly increasing the reliability of fuel cells.

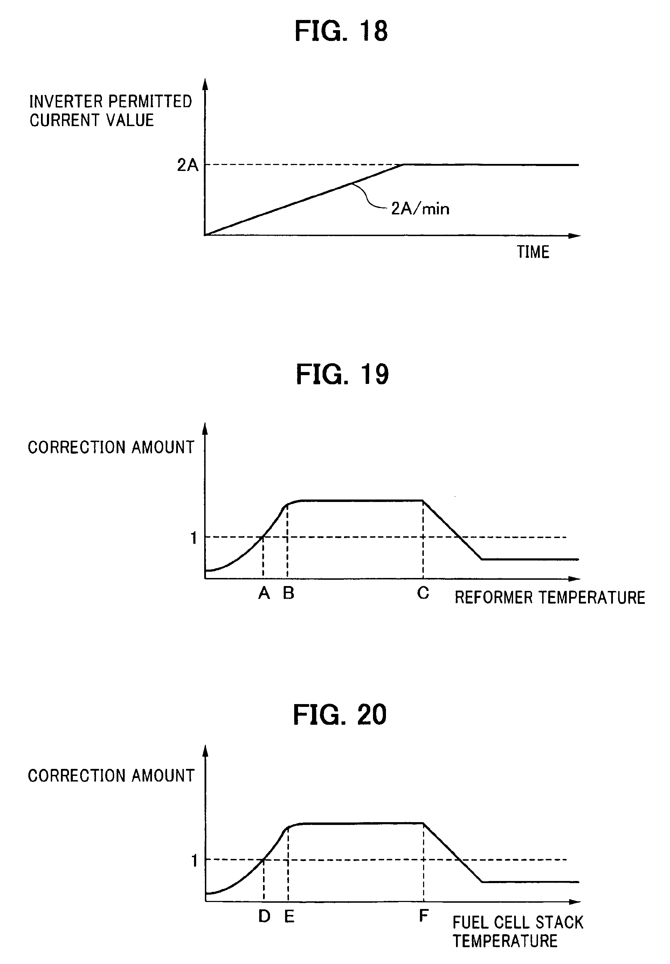

0094 Next, referring to Figures 18 through 22, the control for changing the amount of change per unit time in the inverter permitted current value by using predetermined parameters (parameters other than the load states described above) for following a load according to the solid oxide fuel cell in the second embodiment of the present invention will be described. Examples in which the amount of change per unit time in the inverter permitted current value is changed by using parameters such as the reformer temperature, the fuel cell stack temperature, and outside air temperature to improve fuel cell reliability and increase energy saving performance will be described below; these examples can be freely combined and implemented as needed.

0095 First, referring to Figure 18, changes in the inverter permitted current value premised on changing the amount of change per unit time in the inverter permitted current value by using the inverter permitted current value change means of the second embodiment will be described.

As shown in Figure 18, the inverter permitted current value is changed at, for example, a change amount per unit time of 2 A/min for the inverter permitted current value to reach the target inverter permitted current value.

0096 Next, referring to Figure 19, the control (Example 1) for changing the amount of change per unit time in the inverter permitted current value by using the "reformer temperature," which is a predetermined parameter, by means of the inverter permitted current value change means of the second embodiment.

As shown in Figure 19, the reformer temperature transitions from a low temperature region at which the reform reaction starts to a stable high temperature region at which the reforming reaction is carried out. Moreover, if the reformer goes into an anomalous state or the fuel cells degrade and reach a high temperature, the reformer temperature also goes into an anomalous high temperature region at a temperature above the stable high temperature region.

0097 In the present embodiment, the amount of change per unit time in the inverter permitted current value is first changed (corrected) based on this reformer temperature state.

In Example 1 of the second embodiment of the present invention, the amount of change per unit time in the inverter permitted current value is changed (corrected) based on the temperature of the reformer, which indicates changes in the reforming reaction, therefore the amount of change per unit time in the inverter permitted current value (the rate of change) can be optimized by absorbing changes in the reformer reforming reaction, thereby increasing fuel cell reliability and energy saving performance.

0098 As shown in Figure 19, in Example 1 of the second embodiment, the reformer temperature is in a low temperature region when the reformer temperature is below A°C, and is therefore changed (corrected) so that the amount of correction is less than "1", and the amount of change per unit time in the inverter permitted current value becomes small. When the reformer temperature is between A°C and C°C, the reformer temperature is in a high temperature region state, therefore a change (correction) is made so that the amount of correction is greater than "1", and the amount of change per unit time in the inverter permitted current value is large. Furthermore, when the reformer temperature is between B°C and C°C, the fuel cell device is in a stable high temperature region, therefore the amount of correction applied to the change amount per unit time in the command current value is fixed or constant.

Thus in Example 1, when the reformer temperature is in a temperature region below the first predetermined temperature (the reformer temperature is B°C), the amount of change per unit time in the inverter permitted current value is changed (corrected) to be larger to the extent that the reformer temperature increases.

In Example 1 of the second embodiment, when the reformer is in a temperature region below the second predetermined temperature (the reformer temperature is C°C), the reforming reaction in the reformer is in a stable state at a high temperature state in which the reformer temperature is between A°C and C°C, therefore a correction is made so that the amount of change per unit time in the inverter permitted current value becomes large, thereby increasing load following performance. In a low temperature state in which the reformer temperature is below A°C and the reforming reaction is insufficient, the amount of change per unit time in the inverter permitted current value is changed (corrected) to be small, such that fuel cell reliability can be assured while energy saving performance is improved.

0099 Furthermore, as shown in Figure 19, in Example 2 of the second embodiment, if it is determined that the reformer temperature is in the anomalous high temperature region above the second predetermined temperature (the reformer temperature is C°C), a correction is made to make the amount of change per unit time in the command current value small.

According to Example 1 of the second embodiment, when the reformer temperature is in the anomalous high temperature region, there is a possibility of reformer anomalies or fuel cell anomalies (degradation), hence the amount of change per unit time in the inverter permitted current value was changed (corrected) to become small, preventing further degradation of the fuelcells and improving reliability improved while assuring energy saving performance.

0100 Next, referring to Figure 20, the control (Example 2) for changing the amount of change per unit time in the inverter permitted current value by using the "fuel cell stack temperature," which is a predetermined parameter, by means of the inverter permitted current value change means of the second embodiment will be described.

As shown in Figure 20, the fuel cell stack temperature transitions from the low temperature region at which the generating reaction starts, to the stable high temperature region at which the generating reaction is carried out. Moreover, if fuel cell degrades, the reformer temperature also goes into an anomalous high temperature region, at a temperature even further above the stable high temperature region.

0101 In the present embodiment, the amount of change per unit time in the inverter permitted current value is first changed (corrected) and the inverter permitted current value changed (corrected) based on the fuel cell stack temperature state.

In Example 2 of the second embodiment of the present invention, the amount of change per unit time in the inverter permitted current value is changed (corrected) based on the temperature state of the fuel cell stack, which indicates changes in the generating reaction, therefore the inverter permitted power value can be optimized using the temperature state of the fuel cell stack generating reaction, thereby increasing fuel cell reliability and energy saving performance.

0102 As shown in Figure 20, when the fuel cell stack temperature is below D°C in Example 2 of the second embodiment, a change (correction) is made so that the amount of correction is smaller than "1" and the amount of change per unit time in the inverter permitted current value is small; when the fuel cell stack temperature is between D°C and F°C, a change (correction) is made so that the correction amount is greater than "1" and the amount of change per unit time in the inverter permitted current value is large. Furthermore, when the fuel cell stack temperature is between B°C and C°C, the fuel cell device is in a stable high temperature region, therefore the amount of correction applied to the change amount per unit time in the inverter permitted current value is fixed or constant.

Thus in Example 2, when the fuel cell stack temperature is in a temperature region equal to or lower than the first predetermined temperature (the fuel cell stack temperature is E°C), the amount of change per unit time in the inverter permitted current value is changed (corrected) to be larger, the higher the reformer temperature is.

In the Example 2 of the second embodiment, the generating reaction in the fuel cell stack is stable when the fuel cell stack is in a high temperature region within the temperature region equal to or lower than a predetermined temperature (the fuel cell stack temperature is E°C), and the amount of change per unit time in the inverter permitted power value can be changed (corrected) to be large to increase load following performance, resulting in an improvement in energy saving performance while assuring fuel cell reliability.

0103 Furthermore, as shown in Figure 20, in Example 2 of the second embodiment, if it is determined that the fuel cell stack temperature is in the anomalous high temperature region above the second predetermined temperature (the fuel cell stack temperature is F°C), a change (correction) is made to make the amount of change per unit time in the inverter permitted current value small.

In Example 2 of the second embodiment, the possibility can be conceived of anomalies (degradation) in the fuel cells if the fuel cell stack temperature enters an anomalous high temperature region above the second predetermined temperature, and of a drop in oxygen concentration occurring when generating air supplied to the fuel cell stack expands beyond the normal level but the amount of oxygen contained in that air does not change, thus decreasing the amount of oxygen supplied to the fuel cells and consequently decreasing the amount of oxygen capable of being involved in electrical generation; in such cases the amount of change per unit time in the inverter permitted current value is changed (corrected) to be small, thereby increasing reliability of the fuel cells while assuring energy savings.

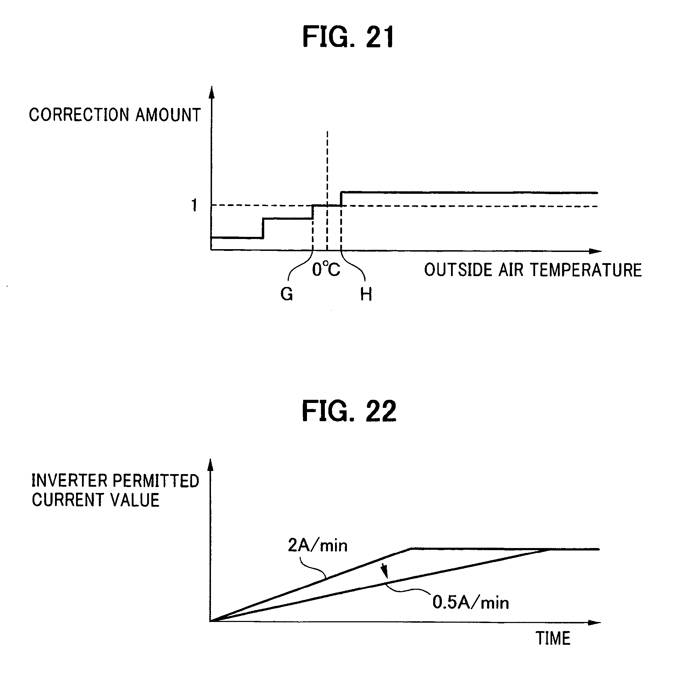

0104 Next, referring to Figure 21, the control (Example 3) for changing the amount of change per unit time in the inverter permitted current value using "outside air temperature", which is a predetermined parameter, by means of the second command current value change means of the second embodiment will be described.

As shown in Figure 21, in Example 3 of the second embodiment, the amount of change per unit time in the inverter permitted current value is changed (corrected) to be smaller, the higher that the outside air temperature is. Specifically, as shown in Figure 21, in the high temperature region where the outside air temperature is above H°C, a change (correction) is made so that the amount of correction is greater than "1" and the amount of change per unit time in the inverter permitted current value is large; when the outside air temperature is between G°C and H°C, the amount of correction is "1," and no correction is made of the amount of change per unit time in the inverter permitted current value; when the outside air temperature is in the low temperature region below G°C, a change (correction) is made so that the amount of correction is less than "1", and the amount of change per unit time in the inverter permitted current value is small.

0105 In the Example 3 of the second embodiment, it is conceivable that when the outside air temperature is low, temperature changes in the space around the fuel cell stack will be small, and that steam production in the reformer will be diminished, so a correction is made to follow such a state and keep the amount of change per unit time in the inverter permitted current value small, thereby increasing energy saving performance and fuel cell reliability.

0106 Next, referring to Figure 22, the control (Example 4) for changing the amount of change per unit time in the inverter permitted current value by using "fuel cell anomaly," which is a predetermined parameter, by means of the inverter permitted current value change means of the second embodiment.

First, the fuel cells degrade with long years of use, so when these fuel cells become degraded, a determination of an anomalous condition is made. For example, the fuel cell operating state can be stabilized by maintaining supply rates of fuel gas, generating air, and water to the fuel cells at a level corresponding to the maximum rated generating power output (e.g., 700W); if the generating chamber temperature is above a predetermined temperature after stabilizing, a determination is made that degradation has occurred. A determination of an anomalous fuel cell state is also made for a clogged filter or the like.

0107 In the Example 4 of the second embodiment, when a determination is made that a fuel cell is abnormal, a change (correction) from 2 A/min to 0. 5 A/min is specifically made so that the amount of change per unit time in the inverter permitted current value is made small, as shown in Figure 21.

In the Example 4 of the second embodiment, when a determination is made of an abnormal fuel cell due to fuel cell degradation or filter clogging or the like, a change (correction) is made so that the amount of change per unit time in the inverter permitted current value becomes small, and the inverter permitted current value is lowered, so fuel cell reliability can be increased while improving energy saving performance.

0108 Next we discuss a solid oxide fuel cell according to a third embodiment of the present invention. This third embodiment combines the above-described first inverter permitted current value change means of the first embodiment and second inverter permitted current value change means of the second embodiment.

Specifically, the amount of change per unit time in the inverter permitted current value is changed according to load amount by the first inverter permitted current value change means, then the amount of change per unit time in the inverter permitted current value changed by the first inverter permitted current value change means is further changed according to predetermined parameters by the second inverter permitted current value change means.

In the third embodiment, it is also acceptable to make appropriate combinations as needed of Examples 1 through 8 of the first embodiment described above, and it is also acceptable to make appropriate combinations as needed of Examples 1 through 4 of the second embodiment described above.

0109 In the third embodiment, the amount of change per unit time in the inverter permitted current value is first changed according to load amount by using the first inverter permitted current value change means, then a judgment is made of the conditions in which changes in the generating reaction or the reforming reaction arise when using the second inverter permitted current value change means, and the amount of change per unit time in the inverter permitted current value is further changed, therefore control sensitivity can be increased by the provision of the first inverter permitted current value change means for optimally changing the amount of change per unit time in the inverter permitted current value according to load amount; moreover, the inverter permitted current value is also changed according to parameters other than load, making it possible to assure reliability of the fuel cells so that load following performance is safely increased.

0110 Although the present invention has been explained with reference to specific, preferred embodiments, one of ordinary skilled in the art will recognize that modifications and improvements can be made while remaining within the scope of the present invention. The scope of the present invention is determined solely by appended claims.

## Claims

1. A solid oxide fuel cell device (1) with a load following function for changing a fuel supply rate in response to a load defined as a required power determined by demand power, comprising:
a fuel cell module (2) having a fuel cell stack (14) composed of a plurality of solid oxide fuel cells and a reformer (20) for reforming fuel and supplying the fuel to the fuel cells;
inverter means (54) for receiving electrical power generated by the fuel cell module (2) and converting the power to alternating power;
command power value setting means (111) for setting a command power value to be generated by the fuel cell module (2) based on an amount of the load;
fuel control means (38) for determining a fuel supply rate and supplying the fuel by the fuel supply rate to the fuel cells so as to generate the command power value;
inverter permitted power value instruction means for instructing to the inverter means (54) an inverter permitted power value corresponding to the command power value, which is the permitted amount of power to be extracted from the fuel cell module (2), after the fuel has been supplied by the fuel supply rate to the fuel cells by the fuel control means (38); and
inverter permitted power value change means (110) for changing an amount of change per unit time in a next inverter permitted power value based on a temperature inside the fuel cell module (2) and outputting the amount of change per unit time to the inverter permitted power value instruction means;
wherein the inverter permitted power value change means (110) changes the amount of change per unit time in the inverter permitted power value to be larger, the higher the temperature is, in a temperature region equal to or lower than a first predetermined temperature (B), and to be smaller, the higher the temperature is, in a temperature region equal to or higher than a second predetermined temperature (C).

2. The solid oxide fuel cell device according to claim 1, wherein the temperature inside the fuel cell module (2) is the temperature of the reformer (20), and the solid oxide fuel cell device (1) further comprises reformer temperature detection means (184) for detecting the temperature of the reformer (20).

3. The solid oxide fuel cell device according to claim 1 or 2, wherein the temperature inside the fuel cell module (2) is the temperature of the fuel cell stack (14), and the solid oxide fuel cell device (1) further comprises stack temperature detection means for detecting the temperature of the fuel cell stack (14).

4. The solid oxide fuel cell device according to claim 1, wherein the inverter permitted power value change means controls the amount of change per unit time in the inverter permitted power value so as to be constant in a temperature region between the first predetermined temperature (B) and the second predetermined temperature (C).

5. A method for operating a solid oxide fuel cell device (1) with a load following function for changing a fuel supply rate in response to a load defined as a required power determined by demand power, the fuel cell device (1) comprising:
a fuel cell module (2) having a fuel cell stack (14) composed of a plurality of solid oxide fuel cells and a reformer (20) for reforming fuel and supplying the fuel to the fuel cells;
inverter means (54) for receiving electrical power generated by the fuel cell module (2) and converting the power to alternating power;
the method including the steps:
setting a command power value to be generated by the fuel cell module (2) based on an amount of the load;
determining a fuel supply rate and supplying the fuel by the fuel supply rate to the fuel cells so as to generate the command power value;
instructing to the inverter means (54) an inverter permitted power value corresponding to the command power value, which is the permitted amount of power to be extracted from the fuel cell module (2), after the fuel has been supplied by the fuel supply rate to the fuel cells; and
changing an amount of change per unit time in a next inverter permitted power value based on a temperature inside the fuel cell module (2) and outputting the amount of change per unit time;
changing the amount of change per unit time in the inverter permitted power value to be larger, the higher the temperature is, in a temperature region equal to or lower than a first predetermined temperature (B), and to be smaller, the higher the temperature is, in a temperature region equal to or higher than a second predetermined temperature (C).

## Patentansprüche

1. Festoxidbrennstoffzellenvorrichtung (1) mit einer Lastfolgefunktion zum Ändern einer Brennstoffzuführrate in Antwort auf eine Last, die als eine erforderliche Leistung definiert ist, die durch eine angeforderte Leistung bestimmt ist, mit:
einem Brennstoffzellenmodul (2), das einen Brennstoffzellenstapel (14) aus einer Vielzahl von Festoxidbrennstoffzellen und einen Reformer (20) zum Reformieren von Brennstoff und zum Zuführen des Brennstoffes zu den Brennstoffzellen aufweist;
Invertermitteln (54) zum Aufnehmen von elektrischer Leistung, die von dem Brennstoffzellenmodul (2) erzeugt ist, und zum Umwandeln der Leistung in Wechselleistung;
Befehlsleistungswerteinstellmitteln (111) zum Einstellen eines Befehlsleistungswertes, der von dem Brennstoffzellenmodul (2) zu erzeugen ist, und zwar auf der Grundlage einer Größe der Last;
Brennstoffsteuermitteln (38) zum Bestimmen einer Brennstoffzuführrate und zum Zuführen des Brennstoffes mit der Brennstoffzuführrate zu den Brennstoffzellen, um den Befehlsleistungswert zu erzeugen;
Instruktionsmitteln für einen vom Inverter zugelassenen Leistungswert, und zwar zum Instruieren der Invertermittel (54) mit einem vom Inverter zugelassenen Leistungswert entsprechend dem Befehlsleistungswert, wobei es sich um die zugelassene Größe der Leistung handelt, die aus dem Brennstoffzellenmodul (2) zu extrahieren ist, und zwar nachdem der Brennstoff mit der Brennstoffzuführrate den Brennstoffzellen durch die Brennstoffsteuermittel (38) zugeführt worden ist; und
Änderungsmitteln (110) für den vom Inverter zugelassenen Leistungswert, und zwar zum Ändern einer Größe einer Änderung pro Zeiteinheit bei dem nächsten bzw. folgenden vom Inverter zugelassenen Leistungswert auf der Grundlage einer Temperatur im Inneren des Brennstoffzellenmoduls (2) und zum Ausgeben der Größe der Änderung pro Zeiteinheit an die Instruktionsmittel für den vom Inverter zugelassenen Leistungswert;
wobei die Änderungsmittel (110) für den vom Inverter zugelassenen Leistungswert die Größe der Änderung pro Zeiteinheit in dem vom Inverter zugelassenen Leistungswert auf einen um so größeren Wert ändern, je höher die Temperatur ist, und zwar in einem Temperaturbereich kleiner gleich einer ersten vorbestimmten Temperatur (B), und auf einen um so kleineren Wert, je höher die Temperatur ist, und zwar in einem Temperaturbereich größer gleich einer zweiten vorbestimmten Temperatur (C).

2. Festoxidbrennstoffzellenvorrichtung nach Anspruch 1, wobei die Temperatur im Inneren der Brennstoffzellenmoduls (2) die Temperatur des Reformers (20) ist, wobei die Festoxidbrennstoffzellenvorrichtung (1) ferner Reformertemperaturertassungsmittel (184) zum Erfassen der Temperatur des Reformers (20) aufweist.

3. Festoxidbrennstoffzellenvorrichtung nach Anspruch 1 oder 2, wobei die Temperatur im Inneren des Brennstoffzellenmoduls (2) die Temperatur des Brennstoffzellenstapels (14) ist und wobei die Festoxidbrennstoffzellenvorrichtung (1) ferner Stapeltemperaturerfassungsmittel zum Erfassen der Temperatur des Brennstoffzellenstapels (14) aufweist.

4. Festoxidbrennstoffzellenvorrichtung nach Anspruch 1, wobei die Änderungsmittel für den vom Inverter zugelassenen Leistungswert die Größe der Änderung pro Zeiteinheit in dem vom Inverter zugelassenen Leistungswert so steuern, dass diese in einem Temperaturbereich zwischen der ersten vorbestimmten Temperatur (B) und der zweiten vorbestimmten Temperatur (C) konstant ist.

5. Verfahren zum Betreiben eines Festoxidbrennstoffzellenvorrichtung (1) mit einer Lastfolgefunktion zum Ändern einer Brennstoffzuführrate in Antwort auf eine Last, die als eine erforderliche Leistung definiert ist, die durch eine angeforderte Leistung bestimmt ist, wobei die Brennstoffzellenvorrichtung (1) aufweist:
ein Brennstoffzellenmodul (2) mit einem Brennstoffzellenstapel (14) aus einer Vielzahl von Festoxidbrennstoffzellen und einem Reformer (20) zum Reformieren von Brennstoff und zum Zuführen des Brennstoffes zu den Brennstoffzellen;
Invertermittel (54) zum Aufnehmen von elektrischer Leistung, die von dem Brennstoffzellenmodul (2) erzeugt ist, und zum Umwandeln der Leistung in Wechselleistung;
wobei das Verfahren die Schritte aufweist:
Einstellen eines Befehlsleistungswertes, der von dem Brennstoffzellenmodul (2) zu erzeugen ist, und zwar auf der Grundlage einer Größe der Last;
Bestimmen einer Brennstoffzuführrate und Zuführen des Brennstoffes mit der Brennstoffzuführrate zu den Brennstoffzellen, um den Befehlsleistungswert zu erzeugen;
Instruieren der Invertermittel (54) mit einem vom Inverter zugelassenen Leistungswert entsprechend dem Befehlsleistungswert, wobei es sich um die zugelassene Größe der Leistung handelt, die aus dem Brennstoffzellenmodul (2) zu extrahieren ist, und zwar nachdem der Brennstoff mit der Brennstofizuführrate den Brennstoffzellen zugeführt worden ist; und
Ändern einer Größe einer Änderung pro Zeiteinheit in einem nächsten vom Inverter zugelassenen Leistungswert auf der Grundlage einer Temperatur im Inneren des Brennstoffzellenmoduls (2) und Ausgeben der Größe der Änderung pro Zeiteinheit;
Ändern der Größe der Änderung pro Zeiteinheit in dem vom Inverter zugelassenen Leistungswert auf einen Wert umso größer, je höher die Temperatur ist, und zwar in einem Temperaturbereich kleiner gleich einer ersten vorbestimmten Temperatur (B), und auf einen Wert umso kleiner, je höher die Temperatur ist, und zwar in einem Temperaturbereich größer gleich einer zweiten vorbestimmten Temperatur (C).

## Revendications

1. Dispositif de pile à combustible à oxyde solide (1) à fonction de suivi de charge pour changer un débit d'alimentation de combustible en réponse à une charge définie comme une puissance requise déterminée par une puissance de demande, comprenant :
un module de piles à combustible (2) ayant un empilement de piles à combustible (14) composé d'une pluralité de piles à combustible à oxyde solide et un reformeur (20) pour reformer le combustible et fournir le combustible aux piles à combustible ;
un moyen inverseur (54) pour recevoir une puissance électrique générée par le module de piles à combustible (2) et convertir la puissance en une puissance alternative ;
un moyen de réglage de valeur de puissance de commande (111) pour régler une valeur de puissance de commande que doit générer le module de piles à combustible (2) en fonction d'une quantité de la charge ;
un moyen de commande de combustible (38) pour déterminer un débit d'alimentation de combustible et fournir le combustible au débit d'alimentation de combustible aux piles à combustible afin de générer la valeur de puissance de commande ;
un moyen d'information de valeur de puissance admise d'inverseur pour informer le moyen inverseur (54) d'une valeur de puissance admise d'inverseur correspondant à la valeur de puissance de commande, laquelle est la quantité admise de puissance à extraire du module de piles à combustible (2), après que le combustible a été fourni au débit d'alimentation de combustible aux piles à combustible par le moyen de commande de combustible (38) ; et
un moyen de changement de valeur de puissance admise d'inverseur (110) pour changer une quantité de changement par unité de temps d'une valeur de puissance admise d'inverseur suivante en fonction d'une température à l'intérieur du module à piles à combustible (2) et produire en sortie la quantité de changement par unité de temps vers le moyen d'information de valeur de puissance admise d'inverseur ;
dans lequel le moyen de changement de valeur de puissance admise d'inverseur (110) change la quantité de changement par unité de temps de la valeur de puissance admise d'inverseur pour qu'elle soit plus grande, plus la température est élevée, dans une région de températures égales ou inférieures à une première température prédéterminée (B), et pour qu'elle soit plus petite, plus la température est élevée, dans une région de températures égales ou supérieures à une seconde température prédéterminée (C).

2. Dispositif de pile à combustible à oxyde solide selon la revendication 1, dans lequel la température à l'intérieur du module à piles à combustible (2) est la température du reformeur (20), et le dispositif de pile à combustible à oxyde solide (1) comprend en outre un moyen de détection de température de reformeur (184) pour détecter la température du reformeur (20).

3. Dispositif de pile à combustible à oxyde solide selon la revendication 1 ou 2, dans lequel la température à l'intérieur du module à piles à combustible (2) est la température de l'empilement de piles à combustible (14), et le dispositif de pile combustible à oxyde solide (1) comprend en outre un moyen de détection de température d'empilement pour détecter la température de l'empilement de piles à combustible (14).

4. Dispositif de pile à combustible à oxyde solide selon la revendication 1, dans lequel le moyen de changement de valeur de puissance admise d'inverseur régule la quantité de changement par unité de temps de la valeur de puissance admise d'inverseur pour qu'elle soit constante dans une région de températures comprises entre la première température prédéterminée (B) et la seconde température prédéterminée (C).

5. Procédé d'exploitation d'un dispositif de pile à combustible à oxyde solide (1) à fonction de suivi de charge pour changer un débit d'alimentation de combustible en réponse à une charge définie comme une puissance requise déterminée par une puissance de demande, le dispositif de pile à combustible (1) comprenant :
un module de piles à combustible (2) ayant un empilement de piles à combustible (14) composé d'une pluralité de piles à combustible à oxyde solide et un reformeur (20) pour reformer le combustible et fournir le combustible aux piles à combustible ;
un moyen inverseur (54) pour recevoir une puissance électrique générée par le module de piles à combustible (2) et convertir la puissance en une puissance alternative ;
le procédé comprenant les étapes suivantes :
le réglage d'une valeur de puissance de commande que doit générer le module de piles à combustible (2) en fonction d'une quantité de la charge ;
la détermination d'un débit d'alimentation de combustible et la fourniture du combustible au débit d'alimentation de combustible aux piles à combustible afin de générer la valeur de puissance de commande ;
l'information au moyen inverseur (54) d'une valeur de puissance admise d'inverseur correspondant à la valeur de puissance de commande, laquelle est la quantité admise de puissance à extraire du module de piles à combustible (2), après que le combustible a été fourni au débit d'alimentation de combustible aux piles à combustible ; et
le changement d'une quantité de changement par unité de temps d'une valeur de puissance admise d'inverseur suivante en fonction d'une température à l'intérieur du module à piles à combustible (2) et la production en sortie de la quantité de changement par unité de temps ;
le changement de la quantité de changement par unité de temps de la valeur de puissance admise d'inverseur pour qu'elle soit plus grande, plus la température est élevée, dans une région de températures égales ou inférieures à une première température prédéterminée (B), et pour qu'elle soit plus petite, plus la température est élevée, dans une région de températures égales ou supérieures à une seconde température prédéterminée (C).
